# EUROPEAN PATENT SPECIFICATION

(11) **EP 4 371 399 B1**
(45) Date of publication and mention of the grant of the patent: **10.12.2025**
(21) Application number: 23210927.2
(22) Date of filing: 20.11.2023
(51) Int. Cl.: A01F 15/08, A01F 15/07

(54) **A BALER AND A METHOD FOR INCREASING THE DENSITY OF A BALE IN A BALER**
BALLENPRESSE UND VERFAHREN ZUR ERHÖHUNG DER DICHTE EINES BALLENS IN EINER BALLENPRESSE
PRESSE À BALLES ET PROCÉDÉ POUR AUGMENTER LA DENSITÉ D'UNE BALLE DANS UNE PRESSE À BALLES

(30) Priority: 18.11.2022 IE S20220187
(43) Date of publication of application: 22.05.2024
(73) Proprietor: McHale Engineering Unlimited Company, Ballinrobe, County Mayo (IE)
(72) Inventor: McHale, Padraic, Christopher, Tumneenane, Clonbur, County Galway,, (IE); McHale, Martin, William, Kilmaine Village, Kilmaine, County Mayo,, (IE); McHale, Paul, Gerard, 13 Riverside, Woodquay, Galway,, (IE); Biggins, John, Patrick, 30 Hillcrest, Claremorris, County Mayo,, (IE); Warren, John, Alexander, Coolylaughnan, Hollymount, County Mayo,, (IE); Shanahan, Conor, Paul, Claggan, Ballycroy, Westport, County Mayo,, (IE)
(74) Representative: Gorman, Francis Fergus

(56) References cited:
- CN-U- 209 185 104
- US-A1- 2013 000 497
- US-A1- 2021 212 262

## Description

The present invention relates to a baler, and in particular, to a roller baler of the type commonly referred to as a fixed chamber baler for baling material, for example, crop material into a cylindrical bale of the type commonly referred to as a round bale. The invention also relates to a method for increasing the density of a bale in a bale chamber of a baler, and in particular, in a bale chamber of a fixed chamber round baler. Related prior art with the same aim is known, for example, from CN 209 185 104 U and US 2013/00497 A1. US 2021/212262 A1 discloses a system for monitoring correct circumferential wrapping of a bale in a bale chamber of a baler.

Roller balers, such as fixed chamber balers are commonly used to form relatively large cylindrical bales of crop material, such as grass silage, hay, straw and other such animal fodder and bedding crops. Such large cylindrical bales are, in general, referred to as "round bales". Such round bales formed by fixed chamber balers may range in diameter from 500mm to 2000mm, and may be of axial length ranging from 1000mm to 1300mm, and more typically, are of axial length in the range of 1100mm to 1300mm, and of diameter in the range of 1100mm to 1400mm. Such fixed chamber balers may also be used for baling other materials, for example, waste materials and the like.

Typically, such balers comprise a fixed chamber baler defining a bale chamber within which the crop material is rotated and pressed to form the round bale. The fixed chamber baler is mounted on a chassis, which in turn is supported on a pair of ground engaging wheels. The baler is towed by a suitable towing vehicle, in general, a tractor.

A pick-up mechanism picks up crop material from an elongated sward of the crop material lying in a field, and the crop material is transferred from the pick-up mechanism to the bale chamber. The fixed chamber baler comprises a plurality of bale rotating rollers which are arranged circumferentially around and define the bale chamber. The bale rotating rollers of the fixed chamber baler, as well as the pick-up mechanism and a transfer means which transfers the crop material from the pick-up mechanism to the bale chamber are mechanically driven from power transmitted to the baler from a power take-off shaft of the tractor towing the baler. The hydraulic system of the baler is powered by the hydraulic system of the tractor. Such balers comprising fixed chamber balers are disclosed in PCT Published Application Specification No. WO 02/076183 and PCT Published Application Specification No. WO 2012/131664. The fixed chamber balers typically comprise at least two segments, as described in PCT Specification No. WO 2012/131664 or three segments as described in PCT Specification No. WO 02/076183, each segment carrying an appropriate number of the bale rotating rollers.

One of the segments comprises a closure segment, commonly referred to as a door which is operable relative to the other one or two segments from a closed state defining with the other one or two segments the bale chamber and an open state to allow discharge of a formed bale from the bale chamber. In general, the closure segment is pivotally coupled to the chassis or to one of the other segments which is fixed relative to the chassis, and is pivotal between the open and closed states. A pair of hydraulically powered rams are provided for operating the closure segment between the open and closed states, and for retaining the closure segment in the closed state, against the radial outward pressure applied by the bale in the bale chamber as the bale is approaching its fully formed state.

The density to which the bale is formed is dependent on the pressure applied to the bale in the bale chamber as it is approaching its fully formed state. The greater the pressure applied to the bale in the bale chamber, the greater will be the density to which the bale will be formed. Thus, the density of the bale is determined by the hydraulic pressure applied to the rams which retain the closure segment in the closed state during formation of the bale in the bale chamber. In general, the hydraulic pressure applied to the rams to determine the density to which the bale is formed is selectable, and in general, is referred to as the hydraulic density pressure. Accordingly, the density to which a bale is to be formed is selectable by selecting the hydraulic density pressure.

In general, the hydraulic fluid for powering the hydraulic system of the baler is supplied to the baler at the maximum hydraulic pressure to which it is pressurised by the hydraulic system of a tractor towing the baler, and this maximum hydraulic pressure at which the hydraulic fluid is supplied to the baler is generally referred to as the tractor hydraulic system pressure. The pressure of the hydraulic fluid when supplied to the baler is stepped down from the tractor hydraulic system pressure to a pressure commonly referred to as the baler hydraulic system pressure. Typically, the tractor hydraulic system pressure of the hydraulic fluid is approximately 210 bar, and the baler hydraulic system pressure typically is 180 bar. The hydraulic density pressure, in general, is selectable from the baler hydraulic system pressure, and typically is selectable between 25 bar and 175 bar.

During the formation of the bale in the bale chamber, the closure segment is maintained in the closed state by the hydraulic rams with the pressure of the hydraulic fluid applied to the hydraulic rams being applied at the selected hydraulic density pressure. However, the pressure at which the closure segment is being maintained in the closed state by the hydraulic rams with the hydraulic fluid applied thereto being at the hydraulic density pressure has no effect on the density of the bale until the bale chamber has been filled with crop material, and the formation of the bale is nearing completion. As the formation of the bale is nearing completion, the bale begins to act on the closure segment with a radial outward pressure against the pressure with which the closure segment is being maintained in the closed state by the rams. Thus, as further crop material is being fed into the bale chamber as the formation of the bale is nearing completion, the radial outward pressure applied by the bale to the closure segment increases until the outward radial pressure applied to the closure segment by the bale is equal to the pressure with which the closure segment is acting on the bale as a result of the pressure being applied to the closure segment by the rams with the hydraulic fluid applied thereto at the selected hydraulic density pressure. Once the radial outward pressure of the bale acting on the closure segment exceeds the pressure being applied by the closure segment to the bale, the increasing radial outward pressure begins to urge the closure segment from the closed state thereof against the pressure being applied by the rams to the closure segment.

The displacement of the closure segment from the closed state is monitored, and when the closure segment has been displaced a predefined amount from the closed state, the bale is deemed to have been fully formed. At that stage net wrapping or wrapping film is fed into the bale chamber for circumferentially wrapping the bale in the bale chamber in order to secure the bale circumferentially prior to being discharged from the bale chamber. The circumferential wrapping of the bale in the bale chamber tends to marginally reduce the diameter of the bale, since the closure segment is being urged into the closed state by the rams still supplied with hydraulic fluid at the selected hydraulic density pressure. This marginal reduction in the diameter of the bale tends to marginally increase the density of the bale. However, the degree to which the density of the bale is reduced during circumferential wrapping thereof is marginal.

In general, it is desirable that the density of a bale, depending on the crop material being baled, should be at an optimum density value in order to optimise between the quantity of material in the bale, and the diameter of the bale, so that the bale is of an optimum diameter for handling and transportation.

While the density of a bale can be increased by increasing the hydraulic density pressure at which the bale is being formed in the bale chamber, increasing the hydraulic density pressure has an adverse effect on the baler, since the higher the selected hydraulic density pressure, the greater will be the stresses and strains imposed in the mechanical moving parts of the baler, in particular on the bale forming rollers, the closure segment and the transmission system transmitting mechanical drive from the power take-off shaft of the tractor to the baler. Thus, by increasing the hydraulic density pressure while it would increase the density to which the bale is formed, would increase the wear-and-tear on the baler and furthermore, would shorten the working life of the baler.

There is a need for a method for forming a bale in a fixed chamber baler of increased bale density while at the same time avoiding excessive wear-and-tear on the baler.

The present invention is directed towards providing such a method for increasing the density of a bale formed in a fixed chamber baler, and the invention is also directed towards providing a fixed chamber baler.

According to the invention there is provided a method for increasing the density of a bale in a bale chamber of a fixed chamber baler, the method comprising cycling the pressure applied to the bale in the bale chamber between a first bale pressure and a second bale pressure during circumferential wrapping of the bale in the bale chamber, the second bale pressure being greater than the first bale pressure.

In one embodiment of the invention cycling of the pressure applied to the bale in the bale chamber is commenced on or after the commencement of the circumferential wrapping of the bale in the bale chamber.

In another embodiment of the invention cycling of the pressure applied to the bale in the bale chamber is commenced when the bale has rotated in the bale chamber through a rotational angle of at least 150° from the commencement of circumferential wrapping of the bale in the bale chamber.

Preferably, cycling of the pressure applied to the bale in the bale chamber is commenced when the bale has rotated in the bale chamber through a rotational angle of at least 180° from the commencement of circumferential wrapping of the bale in the bale chamber.

Advantageously, cycling of the pressure applied to the bale in the bale chamber is commenced when the bale has rotated in the bale chamber through a rotational angle of at least 210° from the commencement of circumferential wrapping of the bale in the bale chamber.

Advantageously, cycling of the pressure applied to the bale in the bale chamber is commenced when the bale has rotated in the bale chamber through a rotational angle of at least 240° from the commencement of circumferential wrapping of the bale in the bale chamber.

Preferably, cycling of the pressure applied to the bale in the bale chamber is commenced when the bale has rotated in the bale chamber through a rotational angle lying in the range of 150° to 240° from the commencement of circumferential wrapping of the bale in the bale chamber.

Preferably, circumferential wrapping of the bale in the bale chamber is deemed to commence on the commencement of delivery of material for circumferential wrapping of the bale into the bale chamber.

In another embodiment of the invention the pressure applied to the bale in the bale chamber during cycling thereof is cycled through the first and second bale pressures at a rate in the range of 0.2Hz to 0.5Hz, and preferably, in a range of 0.25Hz to 0.4Hz, and advantageously, at approximately 0.3Hz.

In one embodiment of the invention the lowest value of the first bale pressure increases incrementally in sequential cycles during cycling of the pressure applied to the bale in the bale chamber, and preferably, the incremental increase in the lowest value of the first bale pressure during cycling of the pressure applied to the bale in the bale chamber results from hysteresis.

In one embodiment of the invention the value of the first bale pressure during the first cycle of the cycling of the pressure applied to the bale in the bale chamber, is approximately equal to the pressure applied to the bale in the bale chamber just prior to the commencement of circumferential wrapping of the bale in the bale chamber.

In another embodiment of the invention the value of the second bale pressure applied to the bale in the bale chamber during cycling of the pressure applied to the bale is at least 105% of the value of the pressure applied to the bale in the bale chamber just prior to the commencement of circumferential wrapping of the bale in the bale chamber.

In another embodiment of the invention the value of the second bale pressure applied to the bale in the bale chamber during cycling of the pressure applied to the bale lies in the range of 105% to 700% of the value of the pressure applied to the bale in the bale chamber just prior to the commencement of circumferential wrapping of the bale in the bale chamber.

In another embodiment of the invention the value of the second bale pressure applied to the bale in the bale chamber during cycling of the pressure applied to the bale lies in the range of 110% to 500% of the value of the pressure applied to the bale in the bale chamber just prior to the commencement of circumferential wrapping of the bale in the bale chamber, and in a further embodiment of the invention lies in the range of 120% to 400% of the value of the pressure applied to the bale in the bale chamber just prior to the commencement of circumferential wrapping of the bale in the bale chamber.

In one embodiment of the invention at the beginning of each cycle of the cycling of the pressure applied to the bale in the bale chamber during circumferential wrapping thereof, the pressure applied to the bale in the bale chamber is raised to the second bale pressure, and preferably, at the beginning of each cycle of the cycling pressure, the pressure applied to the bale in the bale chamber during circumferential wrapping thereof is substantially instantaneously raised to the second bale pressure.

In another embodiment of the invention the pressure on being raised to the second bale pressure during each cycle of the cycling of the pressure applied to the bale in the bale chamber during circumferential wrapping thereof is maintained at the second bale pressure for a predefined time period during each cycle of the cycling pressure.

In one embodiment of the invention the predefined time period during which the pressure applied to the bale in the bale chamber is maintained at the second bale pressure during each cycle of the cycling pressure lies in the range of 25% to 75% of the duration of each cycle of the cycling pressure, and preferably, the predefined time period during which the pressure applied to the bale in the bale chamber is maintained at the second bale pressure during each cycle of the cycling pressure is approximately equal to half the time duration of each cycle.

In another embodiment of the invention at the end of the predefined time period of each cycle of the cycling pressure during which the pressure applied to the bale in the bale chamber is maintained at the second bale pressure, the pressure is allowed to fall towards the first bale pressure.

In an alternative embodiment of the invention immediately the pressure applied to the bale in the bale chamber reaches the second bale pressure in each cycle of the cycling pressure, the pressure applied to the bale in the bale chamber is allowed to fall towards the first bale pressure.

Preferably, the pressure applied to the bale in the bale chamber falls exponentially from the second bale pressure towards the first bale pressure during each cycle of the cycling of the pressure.

Preferably, the pressure applied to the bale in the bale chamber during circumferential wrapping thereof is cycled until circumferential wrapping of the bale in the bale chamber has been completed.

In another embodiment of the invention the pressure applied to the bale in the bale chamber during circumferential wrapping thereof is cycled for at least two cycles of the cycling pressure, and advantageously, for at least three cycles of the cycling pressure.

In one embodiment of the invention the first and second bale pressures applied to the bale in the bale chamber during circumferential wrapping thereof are derived from a hydraulic system of the baler.

In another embodiment of the invention the first and second bale pressures applied to the bale in the bale chamber during circumferential wrapping of the bale are applied to the bale in the bale chamber by a pressing means, and preferably, the pressing means is powered by the hydraulic system of the baler.

Preferably, the pressure of the hydraulic fluid to power the pressing means to apply the first bale pressure to the bale in the bale chamber during cycling of the pressure comprises a first hydraulic pressure, and advantageously, the first hydraulic pressure is approximately equal to the pressure of the hydraulic fluid to power the pressing means during formation of the bale in the bale chamber, and preferably, the first hydraulic pressure is approximately equal to the pressure to power the pressing means just prior to the commencement of circumferential wrapping of the bale in the bale chamber. Advantageously, the first hydraulic pressure is approximately equal to the hydraulic density pressure of the hydraulic fluid applied to the pressing means to produce the bale to the desired bale density prior to circumferential wrapping of the bale in the bale chamber.

In another embodiment of the invention the pressure of the hydraulic fluid to power the pressing means to apply the second bale pressure to the bale in the bale chamber during cycling of the pressure comprises a second hydraulic pressure, and preferably, the second hydraulic pressure is derived from a hydraulic pressure of the hydraulic fluid of the hydraulic system of the baler or from a hydraulic pressure at which hydraulic fluid is supplied to the hydraulic system of the baler from a towing vehicle to which the baler is attached for towing thereof.

In another embodiment of the invention the second hydraulic pressure is approximately equal to the maximum operating pressure of the hydraulic system of the baler or the maximum pressure at which hydraulic fluid is supplied to the hydraulic system of the baler from the hydraulic system of the towing vehicle.

In one embodiment of the invention the fixed chamber baler comprises at least two segments, one of which segments comprises a fixed segment, and the other of which segments comprises the pressing means, the pressing means cooperating with the fixed segment to define the bale chamber.

In another embodiment of the invention the pressing means comprises a closure segment cooperating with the fixed segment to define with the fixed segment the bale chamber, and an urging means for urging the closure segment relative to the fixed segment between a closed state with the closure segment defining the bale chamber with the fixed segment, and an open state for accommodating discharge of a bale from the bale chamber. Preferably, the urging means is adapted to apply a first force to the closure segment to urge the closure segment to apply the first bale pressure to the bale in the bale chamber during cycling of the pressure, and to apply a second force to the closure segment to urge the closure segment to apply the second bale pressure to the bale in the bale chamber during cycling of the pressure.

In one embodiment of the invention the urging means is powered by the hydraulic fluid of the hydraulic system of the baler at the first hydraulic pressure to apply the first force to the closure segment, and the urging means is powered by the hydraulic fluid of the hydraulic system of the baler at the second hydraulic pressure to apply the second force to the closure segment.

In another embodiment of the invention the urging means comprises at leastone hydraulic ram, and preferably, a pair of hydraulic rams.

In one embodiment of the invention the formation of the bale in the bale chamber prior to circumferential wrapping thereof is deemed to be complete when the closure segment of the baler is displaced from the closed state through a predefined displacement.

In another embodiment of the invention the predefined displacement through which the closure segment is displaced from the closed state comprises a predefined angular displacement of the closure segment about a first pivot axis about which the closure segment is pivotal from the closed state thereof.

In one embodiment of the invention the predefined angular displacement of the closure segment about the first pivot axis from the closed state lies in the range of 1° to 7°, and preferably, lies in the range of 2° to 5°. Ideally, the predefined angular displacement through which the closure segment is displaced from the closed state about the first pivot axis is approximately 3.5°.

Additionally, the invention provides a fixed chamber baler defining a bale chamber within which a cylindrical bale is formed and circumferentially wrapped, the fixed chamber baler comprising a pressing means for alternately applying a first bale pressure and a second bale pressure to a bale in the bale chamber, and a means for cycling the pressure applied to the bale in the bale chamber between the first bale pressure and the second bale pressure during circumferential wrapping of the bale in the bale chamber for increasing the density of the bale during circumferential wrapping thereof in the bale chamber, the second bale pressure being greater than the first bale pressure.

In one embodiment of the invention the means for cycling the pressure applied to the bale in the bale chamber is responsive to the commencement of the circumferential wrapping of the bale in the bale chamber or to a period having elapsed from the commencement of circumferential wrapping of the bale in the bale chamber for cycling the pressure applied to the bale in the bale chamber.

In another embodiment of the invention the means for cycling the pressure applied to the bale in the bale chamber is responsive to the bale having rotated in the bale chamber through a predefined rotational angle from the commencement of delivery of wrapping material into the bale chamber for circumferential wrapping of the bale therein for cycling the pressure applied to the bale in the bale chamber. Preferably, the predefined rotational angle through which the bale should rotate from the commencement of delivery of wrapping material into the bale chamber before cycling of the pressure applied to the bale in the bale chamber is at least 150°.

Preferably, the predefined rotational angle is at least 180° from the commencement of delivery of wrapping material into the bale chamber.

Advantageously, the predefined rotational angle is at least 210° from the commencement of delivery of circumferential wrapping material into the bale chamber.

Advantageously, the predefined rotational angle is at least 240° from the commencement of delivery of wrapping material into the bale chamber.

Preferably, the predefined rotational angle lies in the range of 150° to 240° from the commencement of delivery of wrapping material into the bale chamber.

Preferably, circumferential wrapping of the bale in the bale chamber is deemed to commence on the commencement of delivery of material for circumferential wrapping of the bale into the bale chamber.

In another embodiment of the invention the means for cycling the pressure applied to the bale in the bale chamber during circumferential wrapping thereof is adapted to cycle the pressure through the first and second bale pressures at a rate in the range of 0.2Hz to 0.5Hz, and preferably, in a range of 0.25Hz to 0.4Hz, and advantageously, at approximately 0.3Hz.

In one embodiment of the invention the pressing means is adapted to increase the lowest value of the first bale pressure incrementally in sequential cycles during cycling of the pressure applied to the bale in the bale chamber, and preferably, the incremental increase in the lowest value of the first bale pressure during cycling of the pressure on the bale in the bale chamber results from hysteresis in the pressing means.

In one embodiment of the invention the pressing means is adapted to apply the first bale pressure to the bale in the bale chamber during the first cycle of the cycling of the pressure at a value approximately equal to pressure applied to the bale in the bale chamber by the pressing means just prior to commencement of circumferential wrapping of the bale in the bale chamber.

In another embodiment of the invention the pressing means is adapted to apply the second bale pressure to the bale in the bale chamber during cycling of the pressure at a value at least 105% of the value of the pressure applied to the bale in the bale chamber just prior to the commencement of circumferential wrapping of the bale in the bale chamber.

Preferably, the pressing means is adapted to apply the second bale pressure to the bale in the bale chamber during cycling of the pressure at a value lying in the range of 105% to 700% of the value of the pressure applied to the bale in the bale chamber just prior to the commencement of circumferential wrapping of the bale in the bale chamber.

Advantageously, the pressing means is adapted to apply the second bale pressure to the bale in the bale chamber during cycling of the pressure at a value lying in the range of 110% to 500% of the value of the pressure applied to the bale in the bale chamber just prior to the commencement of circumferential wrapping of the bale in the bale chamber, and preferably, lying in the range of 120% to 400% of the value of the pressure applied to the bale in the bale chamber just prior to the commencement of circumferential wrapping of the bale in the bale chamber.

In one embodiment of the invention at the beginning of each cycle of the cycling of the pressure applied to the bale in the bale chamber during circumferential wrapping thereof, the pressing means is adapted to raise the pressure applied to the bale in the bale chamber to the second bale pressure, and preferably, the pressing means is adapted to substantially instantaneously raise the pressure applied to the bale in the bale chamber to the second bale pressure at the beginning of each cycle of the cycling pressure.

In another embodiment of the invention the pressing means is adapted to maintain the pressure applied to the bale in the bale chamber during each cycle of the cycling pressure at the second bale pressure for a predefined time period.

In one embodiment of the invention the predefined time period during which the pressure applied to the bale in the bale chamber is maintained at the second bale pressure during each cycle of the cycling pressure lies in the range of 25% to 75% of the duration of each cycle of the cycling pressure, and preferably, the predefined time period during which the pressure applied to the bale in the bale chamber is maintained at the second bale pressure during each cycle of the cycling pressure is approximately equal to half the time duration of each cycle.

Preferably, the pressing means is adapted to allow the pressure applied to the bale in the bale chamber at the end of the predefined time period of each cycle of the cycling pressure to fall from the second bale pressure value towards the first bale pressure.

In another embodiment of the invention the pressing means is adapted to allow the pressure applied to the bale in the bale chamber to fall towards the first bale pressure immediately upon the pressure reaching the second bale pressure during each cycle of the cycling pressure.

Preferably, the pressing means is adapted to allow the pressure applied to the bale in the bale chamber to fall exponentially from the second bale pressure towards the first bale pressure during each cycle of the cycling pressure.

Preferably, the means for cycling the pressure applied to the bale in the bale chamber during circumferential wrapping thereof is adapted to cycle the pressure applied to the bale in the bale chamber until circumferential wrapping of the bale in the bale chamber has been completed.

In another embodiment of the invention the means for cycling the pressure applied to the bale in the bale chamber during circumferential wrapping thereof is adapted to cycle the pressure applied to the bale in the bale chamber for at least two cycles of the cycling pressure, and advantageously, for at least three cycles of the cycling pressure.

In one embodiment of the invention the first and second bale pressures applied by the pressing means to the bale in the bale chamber are derived from a hydraulic system of the baler. Preferably, the hydraulic system of the baler is adapted to produce hydraulic fluid at a first hydraulic pressure for powering the pressing means to apply the first bale pressure to the bale in the bale chamber, and to produce the hydraulic fluid at a second hydraulic pressure for powering the pressing means to apply the second bale pressure to the bale in the bale chamber.

Advantageously, the first hydraulic pressure is approximately equal to the pressure of the hydraulic fluid to power the pressing means to apply a pressure to the bale in the bale chamber during formation of the bale therein, and preferably, the first hydraulic pressure is approximately equal to the pressure to power the pressing means just prior to the commencement of circumferential wrapping of the bale in the bale chamber. Advantageously, the first hydraulic pressure is approximately equal to the hydraulic density pressure of the hydraulic fluid applied to the pressing means to produce the bale to the desired bale density prior to circumferential wrapping of the bale in the bale chamber.

In another embodiment of the invention the second bale pressure is derived from the maximum operating pressure of the hydraulic system of the baler or from the maximum pressure at which hydraulic fluid is supplied to the hydraulic system of the baler from the hydraulic system of a towing vehicle towing and powering the baler.

In one embodiment of the invention the fixed bale chamber comprises at least two segments, one of which segment comprises a fixed segment and the other of which segment comprises the pressing means, the pressing means cooperating with the fixed segment to define the bale chamber.

In one embodiment of the invention the pressing means comprises a closure segment defining and closing a part of the bale chamber, and an urging means for urging the closure segment into a closed state, the urging means being powered by hydraulic fluid of a hydraulic system of the baler alternately at a first hydraulic pressure and at a second hydraulic pressure to apply the respective first and second bale pressures to the bale in the bale chamber.

In another embodiment of the invention the pressing means comprises the closure segment cooperating with the fixed segment to define with the fixed segment the bale chamber, and the urging means for urging the closure segment relative to the fixed segment between a closed state with the closure segment defining the bale chamber with the fixed segment, and an open state for accommodating discharge of a bale from the bale chamber. Preferably, the urging means is adapted to apply a first force to the closure segment to urge the closure segment to apply the first bale pressure to the bale in the bale chamber during cycling of the pressure, and to apply a second force to the closure segment to urge the closure segment to apply the second bale pressure to the bale in the bale chamber during cycling of the pressure.

In one embodiment of the invention the urging means is powered by the hydraulic fluid of the hydraulic system of the baler at the first hydraulic pressure to apply the first force to the closure segment, and the urging means is powered by the hydraulic fluid of the hydraulic system of the baler at the second hydraulic pressure to apply the second force to the closure segment.

In another embodiment of the invention the means for cycling the pressure applied to the bale in the bale chamber comprises a means for cycling the pressure of the hydraulic fluid powering the urging means between the first hydraulic pressure and the second hydraulic pressure. Preferably, the means for cycling the pressure of the hydraulic fluid between the first and second hydraulic pressures comprises a valve system.

In another embodiment of the invention the urging means comprises at least one hydraulic ram, and preferably, a pair of hydraulic rams.

In one embodiment of the invention the first force applied to the closure segment lies in the range of 1,000N to 15,000N, and preferably, lies in the range of 1,250N to 14,500N, and advantageously, is approximately 9,000N.

In another embodiment of the invention the second force applied to the closure segment lies in the range of 9,000N to 18,000N, and preferably, lies in the range of 9,500N to 17,000N, and advantageously, is approximately 14,000N.

In one embodiment of the invention the hydraulic density pressure at which the hydraulic fluid is applied to each ram lies in the range of 10 bar to 240 bar, and in another embodiment of the invention the hydraulic density pressure at which the hydraulic fluid is applied to each ram lies in the range of 20 bar to 220 bar, and in a further embodiment of the invention the hydraulic density pressure lies in the range of 25 bar to 210 bar.

In another embodiment of the invention the maximum operating pressure of the hydraulic system of the baler lies in the range of 140 bar to 240 bar, and in a further embodiment of the invention the maximum operating pressure of the hydraulic system of the baler lies in the range of 150 bar to 220 bar.

In one embodiment of the invention the maximum operating pressure of the hydraulic system of the baler lies in the range of 160 bar to 210 bar.

In one embodiment of the invention the maximum pressure at which the hydraulic fluid is supplied to the hydraulic system of the baler lies in the range of 160 bar to 240 bar, and in another embodiment of the invention the maximum pressure at which the hydraulic fluid is supplied to the hydraulic system of the baler lies in the range of 170 bar to 220 bar, and in a further embodiment of the invention the maximum pressure at which the hydraulic fluid is supplied to the hydraulic system of the baler lies in the range of 180 bar to 210 bar.

In one embodiment of the invention the fixed chamber baler comprises a third segment operable between a bale forming state defining the bale chamber with the fixed segment and the closure segment, and a discharge state for discharging the bale from the bale chamber as the closure segment is being moved between the closed state and the open state.

The invention also provides a combined baler/bale wrapper comprising the fixed chamber baler according to the invention.

Further the invention provides a combined baler/bale wrapper, the combined baler/bale wrapper comprising a baler according to the invention, and a bale wrapper for receiving a circumferentially wrapped bale from the baler for end-to-end wrapping thereof, and preferably, the bale wrapper is located rearwardly of the baler relative to the normal forward direction of travel of the baler.

In one embodiment of the invention the combined baler/bale wrapper comprises a chassis, and the baler and the bale wrapper are mounted on the chassis.

The advantages of the invention are many. A particularly important advantage of the invention is that the density of the bales produced by the baler according to the invention and the method according to the invention is significantly increased over and above the density of bales produced by conventional fixed chamber balers using conventional methods for circumferentially wrapping a bale in the bale chamber. This provides two particularly important advantages. Firstly, by providing higher density bales, there is less air and in turn oxygen entrained in the crop material, such as grass silage of the wrapped bales when the bales are subsequently fully wrapped end-to-end, which thereby enhances fermentation of grass silage in the wrapped bales, and secondly, the diameter of the bales is reduced for the same quantity of material, which results in the bales being more easily manageable, and being more easily handled, and in particular, the bales are more suitable for being transported by road, while still complying with maximum legal load and dimension limits.

A further advantage of the invention is that the increase in the density of the bales produced by the baler and the method according to the invention and the reduction in the diameter of the bales produced by the baler and the method according to the invention is achieved without increasing wear and tear on the baler, since the second and higher bale pressure is only applied by the closure segment to the bale in the bale chamber during circumferential wrapping of the bale intermittently and, in general, only during half or less than half of each cycle of the cycling pressure through the first and second bale pressures during the circumferential wrapping of the bale in the bale chamber.

An additional advantage of the invention is that bales of the increased bale density are produced by the baler without any risk of blockage of material occurring in an infeed system through which material to be baled is delivered to the bale chamber. This advantage is achieved by virtue of the fact that the increase in pressure to the second pressure, which is applied to the bale in the bale chamber in order to increase the bale density of the bale, is only applied to the bale during circumferential wrapping of the bale in the bale chamber, when feeding of material to be baled into the bale chamber has ceased, and therefore, there is no risk of a blockage occurring. Whereas in balers known heretofore, in order to increase the bale density, the pressure applied to the bale in the bale chamber is applied prior to circumferential wrapping of the bale while the material is still being delivered into the bale chamber. In such balers known heretofore, as the formation of the bale is nearing completion the pressure being applied to the bale in the bale chamber reaches a maximum. That in turn increases the power demand by the bale rotating rollers to rotate the bale in the bale chamber. The increased power demand by the bale rotating rollers results in less power being available to the infeed system for delivering the material to be baled to the bale chamber, which thereby results in blockages occurring in the infeed system.

The invention will be more clearly understood from the following description of some preferred embodiments thereof which are given by way of example only with reference to the accompanying drawings, in which:
Fig. 1 is a perspective view of a combined baler/bale wrapper according to the invention for forming and wrapping a round bale,
Fig. 2 is a perspective view of the baler of the combined baler/bale wrapper of Fig. 1 with portions of the baler in different states to that of Fig. 1,
Fig. 3 is a perspective view of the combined baler/bale wrapper of Fig. 1 with the baler illustrated partly cut-away,
Fig. 4 is a perspective view of the combined baler/bale wrapper of Fig. 1 illustrating a portion of the baler in a different state to that of Fig. 1,
Fig. 5 is a perspective view of the baler of the combined baler/bale wrapper of Fig. 1,
Fig. 6 is an underneath plan view of the baler of the combined baler/bale wrapper of Fig. 1 with the baler tilted slightly forwardly,
Fig. 7 is an enlarged underneath plan view of a detail of the baler of the combined baler/bale wrapper of Fig. 1,
Fig. 8 is a schematic side elevational view of a portion of the baler of the combined baler/bale wrapper of Fig. 1,
Fig. 9 is a schematic side elevational view similar to that of Fig. 8 illustrating the portion of the baler of the combined baler/bale wrapper of Fig. 1 in a different state to that of Fig. 8,
Fig. 10 is a block representation of a hydraulic and an electrical circuit of part of a control system of the baler of the combined baler/bale wrapper of Fig. 1, with the hydraulic circuit illustrated in full lines, and the electrical circuit illustrated in broken lines,
Fig. 11 illustrates a graph of a plot of hydraulic pressure applied to hydraulic rams of the baler of the combined baler/bale wrapper of Fig. 1 plotted against time during circumferential wrapping of a bale in accordance with the invention in a bale chamber of the baler of Fig. 1,
Fig. 12 illustrates a graph of a plot of the reduction in the diameter of a bale in the baler of the combined baler/bale wrapper of Fig. 1 plotted against time during circumferential wrapping of the bale in accordance with the invention in the bale chamber of the baler of Fig. 1,
Fig. 13 illustrates a graph of a plot of the reduction in the diameter of a bale in the baler of the combined baler/bale wrapper of Fig. 1 plotted against time during circumferential wrapping of a bale not in accordance with the invention in the bale chamber of the baler of Fig. 1,
Fig. 14 illustrates a graph of a plot of hydraulic pressure applied to the hydraulic rams of the baler of the combined baler/bale wrapper of Fig. 1 plotted against time during circumferential wrapping of a bale in accordance with another embodiment of the invention in the bale chamber of the baler of Fig. 1,
Fig. 15 illustrates a graph of a plot of the reduction in the diameter of a bale in the bale chamber of the combined baler/bale wrapper of Fig. 1 plotted against time during circumferential wrapping of the bale in accordance with the embodiment of the invention of Fig. 14.
Fig. 16 is a perspective view of a baler according to another embodiment of the invention,
Fig. 17 is a perspective view of the baler of Fig. 16 illustrated in a different state to that of Fig. 16,
Fig. 18 is a perspective view of the baler of Fig. 16 illustrating a part of the baler in a different state to that of Fig. 16, and
Fig. 19 is an enlarged perspective view of a detail of the baler of Fig. 16.

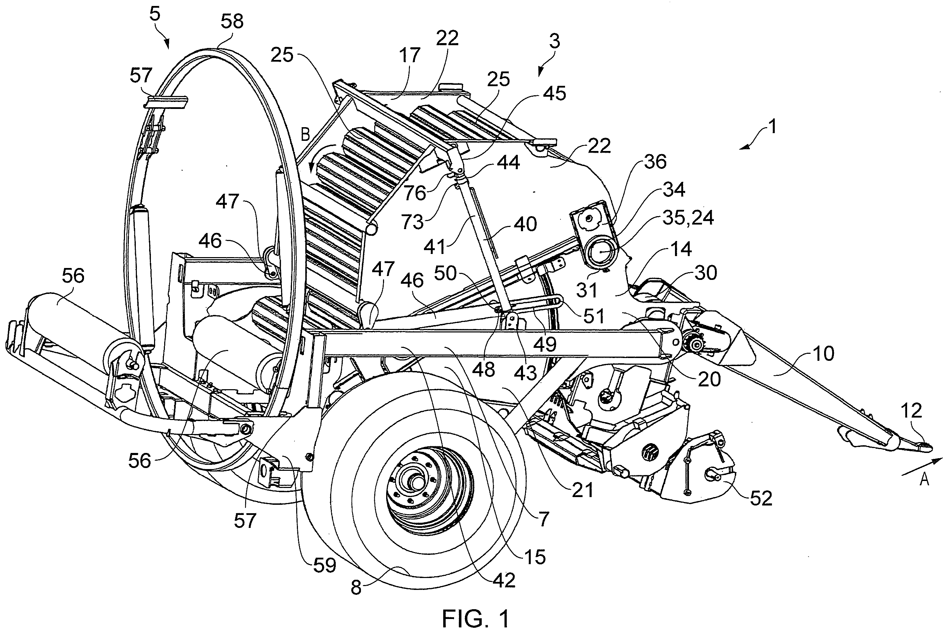

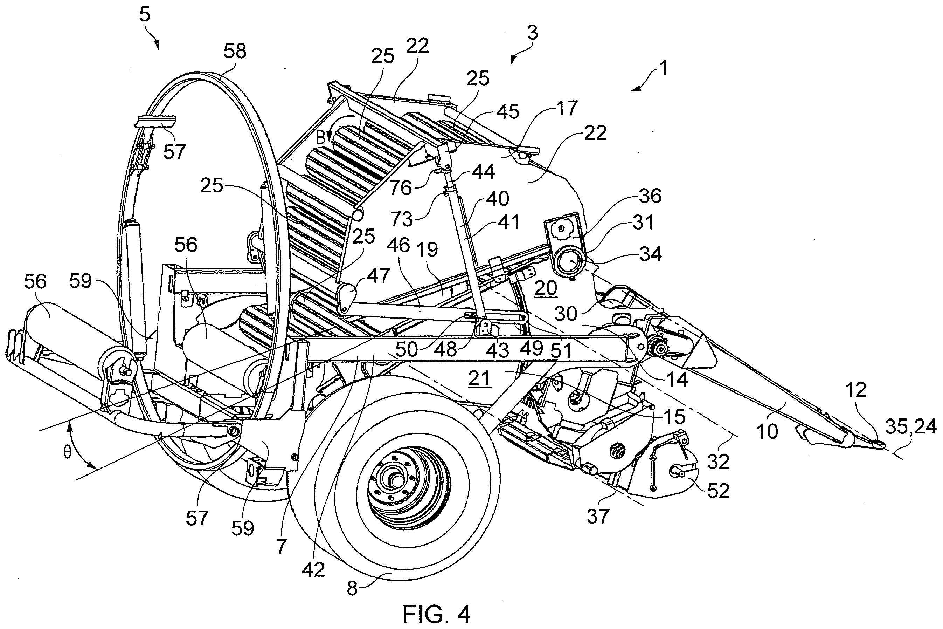

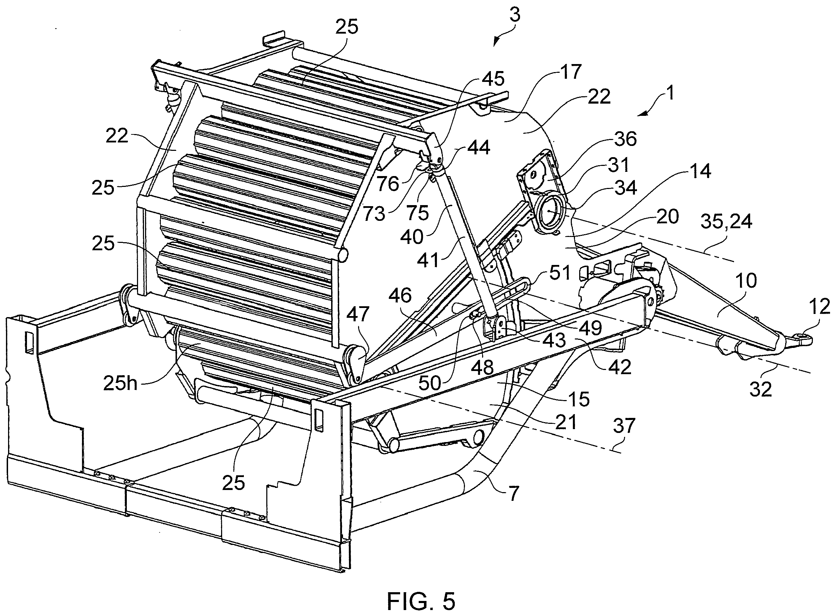

Referring to the drawings, and initially to Figs. 1 to 10 thereof, there is illustrated a combined baler/bale wrapper according to the invention indicated generally by the reference numeral 1 for forming a cylindrical bale of crop material (not shown), hereinafter referred to as a round bale, and for wrapping the bale with a plastics film wrapping material. The round bale may be of diameter in the range of 1100mm to 1400mm, and of axial length in the range of 1100mm to 1300mm. The combined baler/bale wrapper 1 comprises a fixed chamber baler also according to the invention and indicated generally by the reference numeral 3 for producing the round bale, and a bale wrapper 5 configured to receive the bale from the baler 3 and to wrap the bale with the film wrapping material (not shown). The baler 3 is adapted to secure the bale around its circumference thereof by either circumferentially wrapping or circumferentially tying the bale in the baler 3 prior to discharge of the bale from the baler 3 to the bale wrapper 5 for wrapping thereof. The bale may be circumferentially wrapped in the baler 3 with any suitable wrapping material, for example, net wrapping material or sheet film wrapping material, such as an adhesive coated plastics film material, or any other suitable wrapping material. As will be described in detail below, the baler 3 according to the invention is adapted to increase the density of the bale while the bale is being circumferentially wrapped or circumferentially tied in the baler 3.

The baler/bale wrapper 1 without the invention, whereby the density of the bale is increased during circumferential wrapping or tying thereof in the baler 3, is substantially of the type described in PCT Published Application Specification No. WO 02/076183, and is suitable for baling any bale-able material. In this embodiment of the invention the combined baler/bale wrapper 1 is adapted for baling crop material, such as grass silage, hay, straw and other such fodder and bedding crop materials for feeding and bedding animals, although it may also be used in baling other materials such as waste materials. Since the present invention resides in the baler 3, only those parts of the baler 3 which are relevant to the invention will be described in detail below. However, before describing the relevant parts of the baler 3, the combined baler/bale wrapper 1 will be briefly described.

The combined baler/bale wrapper comprises a chassis 7 which is carried on a pair of rotatable mounted ground engaging wheels 8. A pair of forwardly extending members 10, pivotally coupled to the chassis 7 and extending forwardly from the chassis 7 converge towards each other and terminate in a coupler 12 for coupling the baler/bale wrapper 1 to a towing vehicle, namely, a prime mover, for example, a tractor (not shown) for towing the combined baler/bale wrapper 1 in the direction of normal forward travel of the baler/bale wrapper 1, namely, in the direction of the arrow A. The baler 3 is mounted on the chassis 7, and in this embodiment of the invention is a three-segment baler 3 comprising three segments. A first one of the segments comprises a forward fixed segment 14 rigidly secured to the chassis 7. A second one of the segments comprises a lower tipping segment 15 for discharging a formed bale from the baler 3 to the bale wrapper 5. A third one of the segments comprises a pressing means comprising a closure element, in this embodiment of the invention a closure segment 17, and an urging means for operating the closure segment during forming and circumferential wrapping of the bale in the baler 3 as will be described below.

The fixed segment 14 of the baler 3 comprises a pair of spaced apart side walls 20, the tipping segment 15 comprises a pair of spaced apart side walls 21, while the closure segment 17 comprises a pair of spaced apart side walls 22.

A plurality of bale rotating rollers 25 extend between and are rotatably carried on the side walls 20, 21 and 22 of the fixed, tipping and closure segments 14, 15 and 17, respectively, about corresponding rotational axes 24. The bale rotating rollers 25 together with the side walls 20, 21 and 22 define a bale chamber 19 within which the bale is formed and circumferentially wrapped. The bale rotating rollers 25 are mounted fast on respective shafts 26 which are rotatably carried in bearings (not shown) in the side walls 20, 21 and 22 of the fixed, tipping and closure segments 14, 15 and 17, and which define the rotational axes 24 of the bale rotating rollers 25.

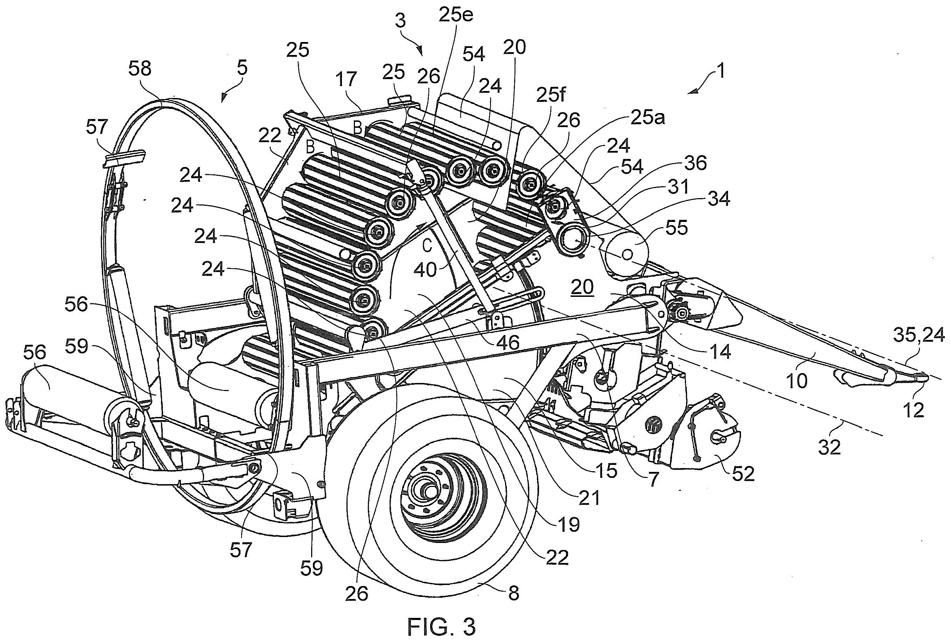

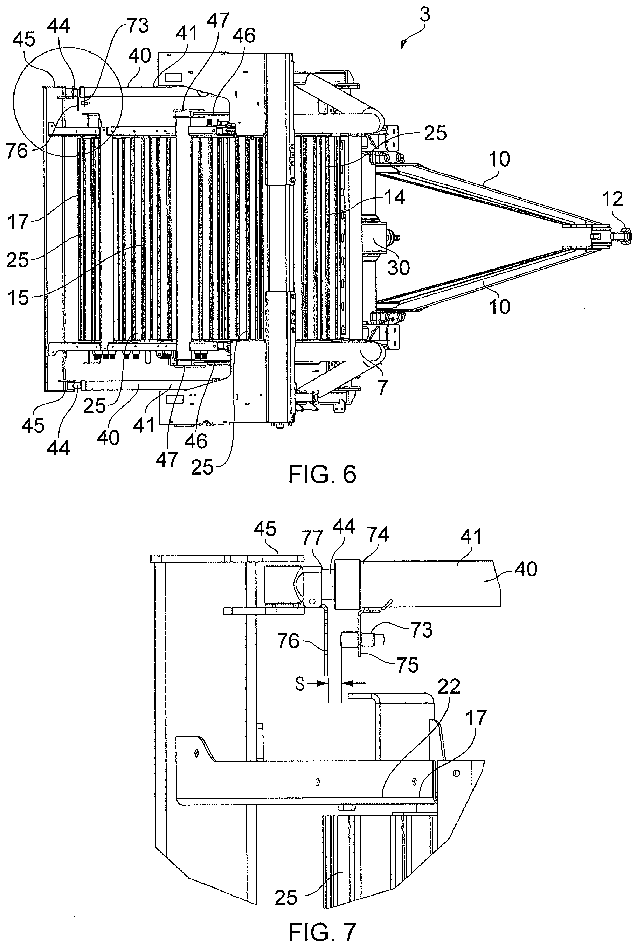

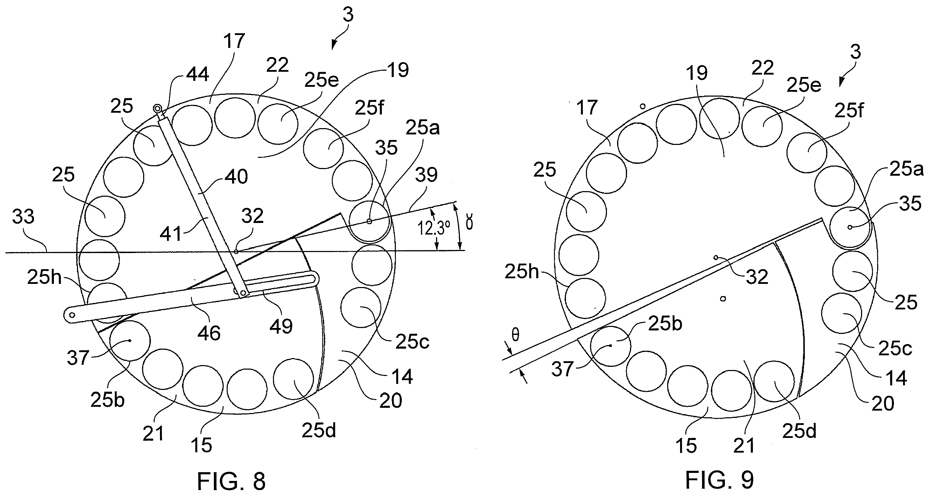

Sprockets (not shown) mounted fast on one end of the respective shafts 26 are driven by transmission chains (also not shown) for rotating the bale rotating rollers 25 in the direction of the arrows B, for rotating the crop material, and in turn the bale in the bale chamber 19 in the direction of the arrows C, see Fig. 3. The transmission chains (not shown) are driven by a transmission system (not shown), of the baler/bale wrapper 1 from a gearbox 30, See Fig. 6, as will be understood by those skilled in the art. Drive from a power take-off shaft of the tractor towing the baler/bale wrapper 1 is transmitted to the gearbox 30 through a Cardan shaft (not shown) as will also be understood by those skilled in the art. The bale chamber 19 defines a main central axis 32 about which the bale is rotated in the bale chamber 19. The main central axis 32 extends substantially horizontally, and lies in a main horizontal plane 33, see Fig. 8.

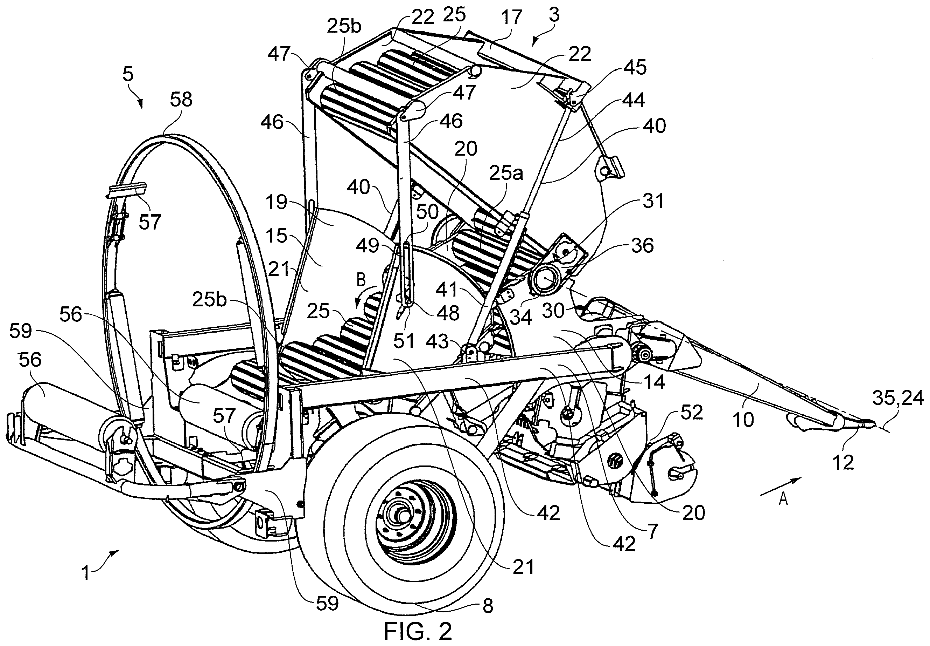

The closure segment 17 is pivotally coupled to the side walls 20 by a pair of pivot brackets 36 extending from the side walls 22 of the closure segment 17. Each pivot bracket 36 comprises a first bearing ring 31 mounted fast on the pivot bracket 36, which is pivotably engageable with a corresponding second bearing ring 34. The second bearing rings 34 are mounted fast on the respective side walls 20 of the fixed segment 14. The second bearing rings 34 define a common first pivot axis 35 about which the closure segment 17 is pivotal between a closed state illustrated in Figs. 1 and 3 closing the bale chamber 19, and defining with the fixed segment 14 and the tipping segment 15 the bale chamber 19, and an open state illustrated in Fig. 2 for accommodating discharge of a formed bale from the bale chamber 19. The first pivot axis 35 defined by the second bearing rings 34 coincides with the rotational axis 24 of the shaft 26 of one of the bale rotating rollers 25, namely, the shaft 26 of the bale rotating roller 25a of the fixed segment 14, and extends parallel to the main central axis 32. The first pivot axis 35 lies in a first plane 39 which contains the main central axis 32 of the bale chamber 19. The first plane 39 containing the first pivot axis 35 and the main central axis 32 lies at an angle *γ* to the main horizontal plane 33 containing the main central axis 32, see Fig. 8. In this embodiment of the invention the angle *γ* is approximately 12.3°. The first pivot axis 35 is provided at a level spaced apart above the main horizontal plane 33 containing the main central axis 32.

The tipping segment 15 is pivotally coupled to the chassis 7 about a second pivot axis 37, which is defined by the rotational axis 24 of another one of the shafts 26 of a corresponding one of the bale rotating rollers 25, namely, the shaft 26 of the bale rotating roller 25b. The second pivot axis 37 extends parallel to the main central axis 32 of the bale chamber 19. The shaft 26 of the bale rotating roller 25b, the rotational axis 24 of which defines the second pivot axis 37 is rotatably mounted in the chassis 7. The tipping segment 15 is pivotal about the second pivot axis 37 between a bale forming state illustrated in Fig. 1 cooperating with the fixed segment 14 and the closure segment 17 in the closed state thereof for defining the bale chamber 19, and a discharged state illustrated in Fig. 2 for discharging the bale from the bale chamber 19 onto the bale wrapper 5. The second pivot axis 37 is located at a level below the main horizontal plane 33 containing the main central axis 32 for improving discharge of a bale from the bale chamber 19 onto the bale wrapper 5. The bale rotating rollers 25 of the closure segment 17 in the closed state thereof define 180° of the circumference of the bale chamber 19, and the bale rotating rollers 25 of the fixed segment 14 and the tipping segment 15 define the remaining 180° of the circumference of the bale chamber 19.

The urging means of the pressing means is provided for operating the closure segment 17 between the closed state and the open state, and is also provided for urging the closure segment 17 into the closed state against the radial outward force exerted by the bale in the bale chamber 19 on the closure segment 17 as the formation of the bale in the bale chamber 19 is nearing completion. The urging means is also provided for urging the closure segment 17 to apply pressure to the bale in the bale chamber 19 during circumferential wrapping of the bale in the bale chamber 19 for determining and increasing the density of the bale during circumferential wrapping thereof, as will be described in detail below. In this embodiment of the invention the urging means comprises a pair of double-acting hydraulic rams 40 acting between the chassis 7 and the closure segment 17. The rams 40 are powered by and operated under the control of a hydraulic system 61 of the baler/bale wrapper 1, as will also be described below. The rams 40 are located on respective opposite sides of the baler 3, and a cylinder 41 of each ram 40 is pivotally coupled to a corresponding one of a pair of side members 42 of the chassis 7 by a pivot coupling bracket 43. A piston rod 44 of each ram 40 is pivotally coupled to the corresponding side wall 22 of the closure segment 17 by a pivot coupling bracket 45.

An operating means is provided for operating the tipping segment 15 from the bale forming state to the discharge state for discharging the bale from the bale chamber 19 as the closure segment 17 is being urged by the rams 40 from the closed state to the open state. In this embodiment of the invention the operating means comprises a pair of link members 46 connected between the tipping segment 15 and the closure segment 17. The link members 46 are located on the respective opposite sides of the baler 3, and each link member 46 is pivotally connected to the corresponding side wall 22 of the closure segment 17 by a pivot coupling bracket 47, and to the corresponding side wall 21 of the tipping segment 15 by a corresponding engagement pin 48 extending outwardly from the corresponding side wall 21. Each engagement pin 48 slideably and pivotally engages an elongated engagement slot 49 extending longitudinally in the corresponding link member 46 between a proximal end 50 and a distal end 51, see Figs. 1 and 2.

The link members 46 are connected to the tipping segment 15 and to the closure segment 17, so that when the tipping segment 15 is in the bale forming state and the closure segment 17 is in the closed state as illustrated in Fig. 1, the engagement pins 48 engage the engagement slots 49 adjacent the respective proximal ends 50 thereof; and when the tipping segment 15 is in the discharge state and the closure segment 17 is in the open state, as illustrated in Fig. 2, the engagement pins 48 engage the engagement slots 49 adjacent the respective distal ends 51 thereof. The engagement slots 49 in the link members 46 are provided to delay the pivoting of the tipping segment 15 from the bale forming state to the discharge state until the closure segment 17 has pivoted a sufficient amount from the closed state, so that when the tipping segment 15 commences to pivot from the bale forming state, the closure segment 17 provides sufficient head room to allow the bale to pass beneath the closure segment 17 as the bale is being discharged from the bale chamber 19 by the tipping segment 15. The tipping segment 15 remains in the bale forming state while the engagement pins 48 move along the engagement slots 49 from the proximal end 50 to the distal end 51 as the closure segment 17 is pivoting from the closed state to the open state.

A pick-up mechanism 52 is carried on the chassis 7 adjacent the forward end thereof for picking up crop material from an elongated windrow of the crop material lying in a field as the combined baler/bale wrapper 1 is towed by a tractor over the windrow. The crop material picked up by the pick-up mechanism 52 is delivered into the bale chamber 19 between two of the bale rotating rollers 25, namely, the bale rotating roller 25c in the fixed segment 14 and the bale rotating roller 25d in the tipping segment 15, see Figs. 8 and 9.

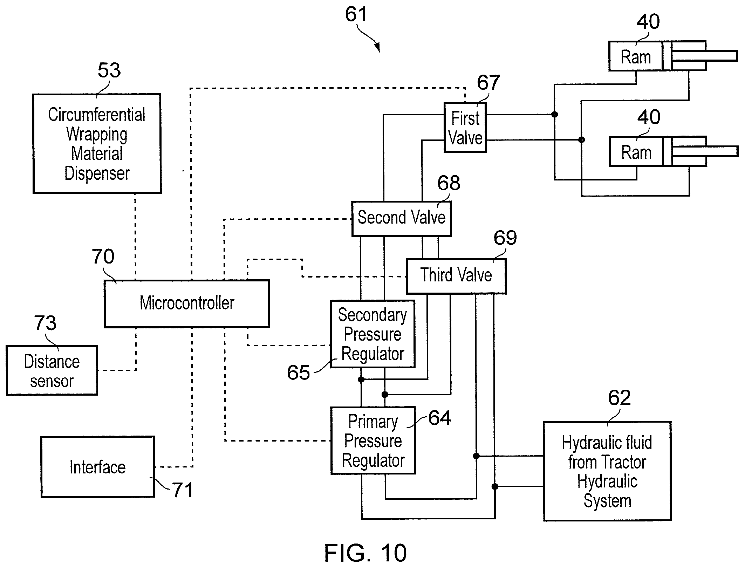

A wrapping material dispenser 53, illustrated in block representation only in Fig. 10, is mounted on the chassis 7 forward of the fixed segment 14 for dispensing plastics wrapping film material 54 from a roll 55 thereof, see Fig. 3, for circumferentially wrapping the bale in the bale chamber 19 to circumferentially secure the bale prior to discharge of the bale from the bale chamber 19. The wrapping film material 54 is dispensed by the wrapping material dispenser 53, and is fed into the bale chamber 19 on completion of the formation of the bale in the bale chamber 19 between a pair of the bale rotating rollers 25, namely, the bale rotating rollers 25e and 25f in the closure segment 17 for circumferentially wrapping the bale as the bale is being rotated in the bale chamber 19 by the bale rotating rollers 25. The feeding of such wrapping film material from a wrapping material dispenser into a bale chamber of a fixed chamber baler as the baler 3 for circumferentially wrapping a bale in the bale chamber while the bale is still being rotated in the bale chamber, will be well known to those skilled in the art, and further description should not be required.

However, it will be appreciated that in some embodiments of the invention the bale may be circumferentially wrapped in the bale chamber 19 by net wrapping material, instead of a plastics film material. Such circumferential net wrapping of a round bale in a bale chamber will be well known to those skilled in the art.

A monitoring means is provided for monitoring the angular displacement *θ* of the closure segment 17 from the closed state. When the angular displacement *θ* of the closure segment 17 reaches a predefined angular displacement value, in this case an angular displacement of approximately 3.5°, the formation of the bale in the bale chamber 19 is deemed to be complete, and circumferential wrapping of the bale in the bale chamber 19 then commences, as will be described below. In this embodiment of the invention the monitoring means for monitoring the angular displacement of the bale from the closed state comprises an inductive distance sensor 73, see Figs. 6 and 7. The distance sensor 73 is secured to a distal end 74 of the cylinder 41 of one of the rams 40 by a mounting bracket 75, and is configured to monitor the spacing distance s between the distance sensor 73 and a reference plate 76. The reference plate 76 is secured to a distal end 77 of the piston rod 44 of the corresponding ram 40. The spacing s between the distance sensor 73 and the reference plate 76 is proportional to the angular displacement *θ* of the closure segment 17 from the closed state.

Turning now briefly to the bale wrapper 5, the bale wrapper 5 is mounted on the chassis 7 to the rear thereof, and comprises a pair of bale support rollers 56 for receiving the bale from the baler 3 and for rotating the bale about its central longitudinal axis. A pair of wrapping material dispensers (not shown) are mounted on carrier brackets 57, which are mounted on a carrier ring 58 at 180° intervals around the carrier ring 58. The carrier ring 58 is mounted to rotate around the bale supported on the bale support rollers 56, so that as the bale is being rotated by the bale support rollers 56, wrapping material is dispensed onto the rotating bale from the wrapping material dispensers on the carrier brackets 57, as the dispensers are revolved around the rotating bale by the rotating carrier ring 58. The carrier ring 58 is rollably carried on driven rollers (not shown) carried on mounting plates 59 extending rearwardly from the chassis 7 on respective opposite sides thereof. This aspect of the bale wrapper 5 is described in PCT Specification No. WO 02/076183.

Turning now to the hydraulic system 61 of the baler/bale wrapper 1, since the present invention relates only to the baler3, only the part of the hydraulic system 61 which relates to the baler 3 will be described. The hydraulic system 61 of the baler/bale wrapper 1 is supplied with pressurised hydraulic fluid from a pressurised hydraulic fluid source, which in this embodiment of the invention is supplied from the pressurised hydraulic fluid supply of the hydraulic system 62 of the tractor towing the baler/bale wrapper 1. The pressurised hydraulic fluid is supplied from the hydraulic system 62 of the tractor to the hydraulic system 61 of the baler/bale wrapper 1 at a pressure P1, which is the maximum operating pressure of the hydraulic system of the tractor, commonly referred to as the tractor hydraulic system pressure, and typically the pressure P1 is approximately 210 bar.

A primary pressure regulator 64 of the baler hydraulic system 61 regulates the pressure of the hydraulic fluid from the tractor hydraulic system 62 from the tractor hydraulic system pressure P1 to a pressure P2, which is the maximum operating pressure of the hydraulic system 61 of the baler/bale wrapper 1 and is commonly referred to as the baler hydraulic system pressure. In this embodiment of the invention the baler hydraulic system pressure P2 is approximately 180 bar.

A secondary pressure regulator 65 reduces the pressure of the hydraulic fluid from the baler hydraulic system pressure P2 to any one of a plurality of selectable pressures at which the hydraulic fluid from the hydraulic system 61 is to be applied to the hydraulic rams 40 for operating the closure segment 17 between the open and the closed states, and in particular, for urging the closure segment 17 into the closed state during formation and circumferential wrapping of the bale in the bale chamber 19 in order to determine the density to which the bale is formed prior to circumferential wrapping of the bale in the bale chamber 19. These selectable pressures of the hydraulic fluid are commonly referred to as the density pressures of the hydraulic fluid, or the hydraulic density pressure, since they determine the density to which the bale is formed in the bale chamber 19. In this embodiment of the invention the selectable hydraulic density pressures are selectable in the range of 25 bar to 165 bar, in steps of 17.5 bar.

A first solenoid operated spool valve 67 controls the direction of flow of hydraulic fluid from the hydraulic system 61 to the rams 40 for operating the rams 40 between a retracted state and the extended state, for in turn operating the closure segment 17 between the closed state and the open state, and vice versa. A valving system comprising a second solenoid operated valve 68 and a third solenoid operated valve 69 determines the pressure at which the hydraulic fluid is applied to the rams 40 through the first valve 67. The second valve 68 selectively connects the first valve 67 to the hydraulic fluid at the selected hydraulic density pressure from the secondary pressure regulator 65, or to the output of the third valve 69. The third valve 69 selectively connects the second valve 68 to either the hydraulic fluid at the baler hydraulic system pressure P2 from the primary pressure regulator 64 or to the tractor hydraulic system pressure P1 directly from the hydraulic system 62 of the tractor.

During the formation of the bale in the bale chamber 19, and during initial circumferential wrapping of the bale in the bale chamber 19, in this case until the bale has rotated through a predefined rotational angle of approximately 210° from the commencement of delivery of the wrapping film 54 into the bale chamber 19 for circumferential wrapping of the bale in the bale chamber 19, the second valve 68 is operated to apply the hydraulic fluid at the selected hydraulic density pressure from the secondary pressure regulator 65 to the first valve 67, and in turn to the rams 40 for urging the closure segment 17 into the closed state. During the remainder of circumferential wrapping of the bale in the bale chamber 19, a cycling means, in this case provided by the second valve 68 is operated, as will be described below, to cycle the pressure of the hydraulic fluid applied to the rams 40 through the first valve 67 between a first hydraulic pressure, in this case a pressure approximately equal to the selected hydraulic density pressure from the secondary pressure regulator 65, and a second hydraulic pressure approximately equal to one of the baler hydraulic system pressure P2 or the tractor hydraulic system pressure P1, which is determined by the third valve 69 as will be described below.

By cycling the pressure of the hydraulic fluid applied to the rams 40 during circumferential wrapping of the bale in the bale chamber 19 between the first and second hydraulic pressures, the pressure applied to the bale in the bale chamber 19 by the closure segment 17 is cycled between a first bale pressure corresponding to the first hydraulic pressure and a second bale pressure corresponding to the second hydraulic pressure during the circumferential wrapping of the bale in the bale chamber. The cycling of the pressure applied to the bale in the bale chamber 19 during circumferential wrapping of the bale therein between the first and second bale pressures further increases the density of the bale above the density to which the bale is formed just prior to the commencement of the circumferential wrapping of the bale.

The value of the predefined rotational angle through which the bale rotates from the commencement of delivery of the wrapping film 54 into the bale chamber 19 to the commencement of cycling of the pressure applied to the closure segment 17, in this embodiment of the invention is set at 210°. That is to ensure that the leading edge of the wrapping film 54 will have passed a gap and the bale rotating roller 25h of the closure segment 17, which is the bale rotating roller 25 which defines the gap between itself and the bale rotating roller 25b of the tipping segment 15 when the closure segment 17 has been angularly displaced from the closed state thereof as the formation of the bale in the bale chamber 19 is nearing completion. By delaying the commencement of cycling of the pressure until the leading edge of the wrapping film 54 has passed the gap and the bale rotating roller 25h of the closure segment 17, any risk of the leading edge of the wrapping film 54 being forced out through the gap defined between the bale rotating rollers 25h and 25b of the closure segment 17 and the tipping segment 15, respectively, due to the increase in pressure being applied to the bale in the bale chamber 19 is avoided. However, it will be appreciated that the value of the predefined rotational angle of the bale in the bale chamber may be greater than or less than 210°, depending on the angular distance in the direction of rotation of the bale in the bale chamber 19 between the location at which the wrapping film is delivered into the bale chamber 19 and the location of the relevant gap defined by the angular displacement of the closure segment 17 from the closed state thereof.

A control means comprising a microcontroller 70 of the baler/bale wrapper 1, which controls the operation of the baler/bale wrapper 1, controls the operation of the hydraulic system 61 including the primary and secondary pressure regulator64 and 65, the solenoid operated first, second and third valves 67, 68 and 69, respectively, as well as the operation of the wrapping material dispenser 53 for dispensing the wrapping film 54 from the roll 55 thereof, and delivering the wrapping film 54 into the bale chamber 19 for circumferential wrapping of the bale in the bale chamber 19. The microcontroller 70 reads signals from the distance sensor 73 to determine when the closure segment 17 has been displaced through the predefined angular displacement of 3.5° indicating that the formation of the bale in the bale chamber 19 is complete, so that circumferential wrapping of the bale in the bale chamber 19 can commence. An interface 71 located on the baler/bale wrapper 1 is provided for inputting data into the microcontroller 70 for operating the baler/bale wrapper 1, and also for inputting a selected value of the selectable values of the hydraulic density pressure at which the secondary regulator 65 is to regulate the pressure of the hydraulic fluid applied to the rams 40 for operating the closure segment 17 between the open and closed states, and also for urging the closure segment 17 into the closed state during formation of the bale in the bale chamber. The interface 71 may be any suitable interface, such as a key pad, a touch screen or any other suitable interface

The microcontroller 70 is programmed to operate the secondary pressure regulator65 to set the pressure, at which the hydraulic fluid is applied to the second valve 68, at the selected value of the hydraulic density pressure inputted to the microcontroller 70 through the interface 71. Additionally, on the selected value of the hydraulic density pressure being inputted to the microcontroller 70, the microcontroller 70 determines to which one of the baler hydraulic system pressure P2 or the tractor hydraulic system pressure P1 the second valve 68 should be connected through the third valve 69 to produce the second hydraulic pressure during cycling of the hydraulic pressure between the first and second hydraulic pressures during circumferential wrapping of the bale in the bale chamber 19. In this embodiment of the invention the microcontroller 70 selects the one of the baler hydraulic system pressure P2 or the tractor hydraulic system pressure P1 to produce the second hydraulic pressure so that the second hydraulic pressure is at least 122% of the selected hydraulic density pressure. Therefore, if the selected value of the hydraulic density pressure exceeds 82% of the baler hydraulic system pressure P2, the microcontroller 70 sets the third valve 69 to connect the second valve 68 to the tractor hydraulic system pressure P1, so that the second hydraulic pressure applied to the second valve 68 is approximately equal to the tractor hydraulic system pressure P1. Otherwise, the microcontroller 70 sets the third valve 69 to connect the second valve 68 to the baler hydraulic system pressure P2, so that the second hydraulic pressure applied to the second valve 68 is approximately equal to the baler hydraulic system pressure P2.

In order to assist in an understanding of the invention, the operation of the hydraulic system 61 during the formation and circumferential wrapping of the bale in the bale chamber will now be described.

During formation of the bale and during initial circumferential wrapping of the bale in the bale chamber 19 until the bale has rotated through the predefined rotational angle of approximately 210° from the commencement of delivery of the wrapping film 54 into the bale chamber 19, the second valve 68 is operated under the control of the microcontroller 70 to apply the hydraulic fluid to the rams 40 through the first valve 67 at the selected hydraulic density pressure. Once the bale has rotated in the bale chamber 19 through the predefined rotational angle of 210° from the commencement of delivery of the wrapping film 54 into the bale chamber 19, the microcontroller 70 operates the second valve 68 to cycle the pressure at which the hydraulic fluid is applied to the rams 40 between the first hydraulic pressure, namely, the selected hydraulic density pressure and the second hydraulic pressure, which as discussed above is determined by the setting of the third valve 69 based on the selected value of the hydraulic density pressure.

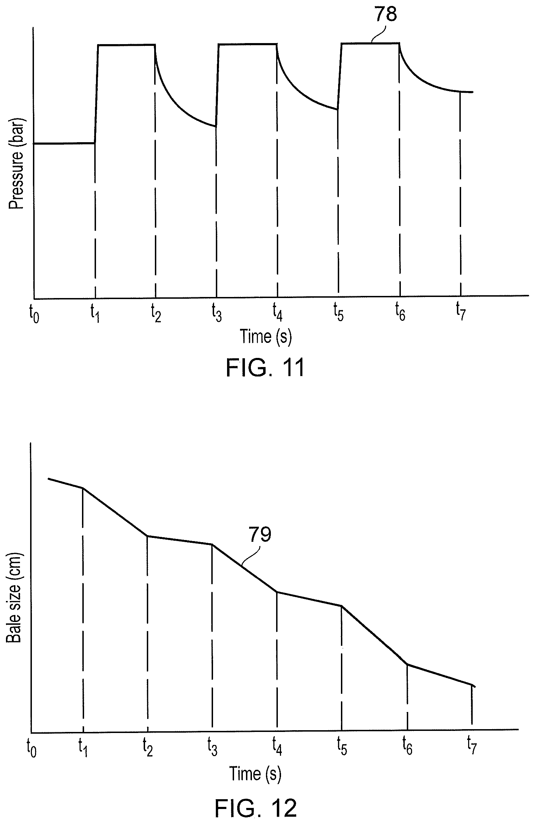

Referring now to Fig. 11, Fig. 11 illustrates a graph 78 of an example of the cycling of the pressure of the hydraulic fluid applied to the rams 40 with respect to time during circumferential wrapping of a bale in the bale chamber 19. The pressure of the hydraulic fluid in bar applied to the rams 40 is plotted on the Y-axis of Fig. 11, and time in seconds is plotted on the X-axis of Fig. 11, and the pressure of the hydraulic fluid applied to the rams 40 is cycled at 0.3Hz. At time t₀ circumferential wrapping of the bale in the bale chamber 19 commences. At time t₁ the bale has rotated through the predefined rotational angle of approximately 210° from the commencement of delivery of the wrapping film 54 into the bale chamber 19. During the period from the time t₀ to time t₁ the pressure of the hydraulic fluid applied to the rams 40 is maintained at the hydraulic density pressure. In this example the selected hydraulic density pressure applied to the rams 40 during forming of the bale in the bale chamber 19 had been selected at one of the higher selectable hydraulic density pressures close to the baler hydraulic system pressure P2. Accordingly, in this example the third valve 69 is set under the control of the microcontroller 70 to connect the second valve 68 to the hydraulic fluid at the tractor hydraulic system pressure P1, so that the second hydraulic pressure at which the hydraulic fluid is applied to the rams 40 by the second valve 68 during cycling of the pressure of the hydraulic fluid applied to the rams 40 is approximately at the tractor hydraulic system pressure P1. Accordingly, at time t₁ the second valve 68 is operated under the control of the microcontroller 70 to commence cycling of the pressure of the hydraulic fluid applied to the rams 40 between the first hydraulic pressure, namely, the hydraulic density pressure and the second hydraulic pressure, namely, the tractor hydraulic system pressure P1 .

At time t₁ at the commencement of cycling of the hydraulic pressure, the second valve 68 is operated to apply the hydraulic fluid to the rams 40 at the second hydraulic pressure, and the pressure of the hydraulic fluid applied to the rams 40 rises substantially instantaneously to the second hydraulic pressure. The second valve 68 is operated for the first half of the first cycle of the cycling pressure from time t₁ to time t₂ to maintain the pressure of the hydraulic fluid applied to the rams 40 at the second hydraulic pressure. At the cycling rate of 0.3Hz the time duration of the first half of the first cycle is approximately 1.5 seconds. At time t₂ the second valve 68 is operated to switch the pressure of the hydraulic fluid applied to the rams 40 from the second hydraulic pressure to the hydraulic density pressure. From time t₂ to time t₃ during the second half of the first cycle, the pressure of the hydraulic fluid applied to the rams 40 falls exponentially towards the hydraulic density pressure. However, as can be seen at time t₃ namely at the end of the first cycle of the cycling of the pressure of the hydraulic fluid applied to the rams 40, the pressure of the hydraulic fluid applied to the rams 40 has not quite fallen to the hydraulic density pressure. This is as a result of hysteresis in the baler hydraulic system 61.

At time t₃, the second valve 68 is operated to again apply the hydraulic fluid to the rams 40 at the second hydraulic pressure, at which stage, the pressure of the hydraulic fluid applied to the rams 40 increases substantially instantaneously to the second hydraulic pressure, and so the cycling of the pressure of the hydraulic fluid applied to the rams 40 continues for a total of three cycles from time t₁ to time t₇. At time t₇ circumferential wrapping of the bale in the bale chamber is complete. However, as can be seen at the end of each cycle, the pressure of the hydraulic fluid applied to the rams 40 fails to return completely to the hydraulic density pressure, and as can be seen from the graph 78, the level to which the pressure applied to the rams 40 falls at the end of each cycle progressively increases incrementally above the hydraulic density pressure.

Referring now to Fig. 12, the progressive reduction in the diameter of the bale in centimetres during cycling of the pressure of the hydraulic fluid applied to the rams 40, during circumferential wrapping of the bale in the bale chamber in the example of Fig. 11, is illustrated by the graph 79 of Fig. 12. The reduction in the diameter of the bale is proportional to the reduction in the angular displacement of the closure segment 17 from the closed state as monitored by the distance sensor 73. The reduction in the diameter of the bale illustrated in Fig. 12 has been derived from the reduction in the angular displacement of the closure segment 17 from the closed state during the cycling of the pressure of the hydraulic fluid applied to the rams 40 during the circumferential wrapping of the bale from time t₁ to time t₇. In Fig. 12 the reduction in the diameter of the bale in centimetres from time t₀ to time t₇, which corresponds with the time period from time t₀ to time t₇ of Fig. 11, is plotted on the Y-axis, and time in seconds is plotted on the X-axis.

As can be seen in Fig. 12 from time t₀, to time t₁, a small reduction in the diameter of the bale occurs during initial circumferential wrapping of the bale, while the bale is being rotated through the predefined rotation angle of 210° from the commencement of delivery of the wrapping film 54 into the bale chamber 19. During the first half of the first cycle of the cycling of the pressure of the hydraulic fluid applied to the rams 40 from time t₁ to time t₂, while the pressure of the hydraulic fluid applied to the rams 40 is maintained at the second hydraulic pressure, there is quite a large reduction in the diameter of the bale in the bale chamber 19. During the second half of the first cycle from time t₂ to time t₃, while the pressure of the hydraulic fluid applied to the rams 40 is falling exponentially towards the hydraulic density pressure, there is also a reduction in the diameter of the bale in the bale chamber 19, although the reduction in the diameter of the bale during the second half of the first cycle from time t₂ to time t₃ is not as great as the reduction during the first half of the first cycle from time t₁ to time t₂. During the first half of the second cycle from time t₃ to time t₄, there is a further significant reduction in the diameter of the bale in the bale chamber 19, and during the second half of the second cycle from time t₄ to time t₅, there is also a reduction in the diameter of the bale in the bale chamber 19, but not as great as that during the first half of the second cycle. During the first half of the third cycle from time t₅ to time t₆, there is a further significant reduction in the diameter of the bale in the bale chamber 19, and during the second half of the third cycle from time t₆ and time t₇ during which the pressure of the hydraulic fluid applied to the rams 40 falls off exponentially, there is a further reduction in the diameter of the bale in the bale chamber.

At the end of the third cycle at time t₇ circumferential wrapping of the bale is complete, and the first valve 67 is operated to operate the rams 40 from the retracted state to the extended state, to in turn operate the closure segment 17 from the closed state to the open state, and in turn to operate the tipping segment from the bale forming state to the discharge state for discharging the formed and circumferentially wrapped bale onto the bale support rollers 56 of the bale wrapper 5 for end-to-end wrapping of the circumferentially wrapped bale.

Accordingly, by achieving the significant reduction in the diameter of the bale during circumferential wrapping of the bale in the bale chamber 19 by the method according to the invention, the density of the bale is proportionately increased during the circumferential wrapping of the bale.

In order to show the significant increase in the density of the bale achieved by the method according to the invention whereby the pressure applied to the bale in the bale chamber 19 is cycled between the first bale pressure, corresponding to the hydraulic density pressure and the second bale pressure corresponding to the second hydraulic pressure, in this case, the tractor hydraulic system pressure P1 during circumferential wrapping of the bale therein, as opposed to the increase in density of the bale achieved during conventional circumferential wrapping of a bale in the bale chamber with the pressure of the hydraulic fluid applied to the rams 40 maintained at the hydraulic density pressure, a comparative test was carried out with the same baler, namely, the baler 3, and with the same wrapping film for circumferential wrapping of a bale of similar crop material. In the comparative test, the pressure of the hydraulic fluid applied to the rams 40 during circumferential wrapping of the bale was maintained constant at the same hydraulic density pressure as that during formation of the bale during the comparative test, and which was also the same hydraulic density pressure as that, at which the hydraulic fluid was applied to the rams 40 in the example discussed with reference to Fig. 11.

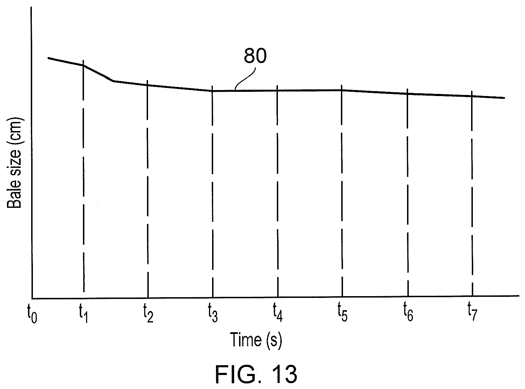

In Fig. 13, a graph 80 illustrating the reduction in the diameter of the bale during circumferential wrapping of the bale in the bale chamber 19 in the comparative test is illustrated. In Fig. 13, the reduction in the diameter of the bale in centimetres during circumferential wrapping of the bale is plotted on the Y-axis, and time in seconds is plotted on the X-axis. In Fig. 13 the time period from time t₀ to time t₇, during circumferential wrapping of the bale in the comparative test corresponds with the time period from time t₀ to time t₇ of the graphs 78 and 79 of Figs. 11 and 12. As can be seen, from Fig. 13 at commencement of circumferential wrapping of the bale in the comparative test there is an initial reduction in the diameter of the bale. However, after the initial reduction in the diameter of the bale there is only a marginal reduction in the diameter of the bale to time t₃. For the remainder of circumferential wrapping of the bale in the bale chamber from time t₃ to time t₇ the diameter of the bale in the comparative test remains substantially constant.

Accordingly, the method according to the invention for increasing the density of the bale during circumferential wrapping of the bale in the bale chamber provides a significant increase in the density of the bale with minimum additional stress on the baler, since the hydraulic fluid is only applied to the rams 40 at the higher second hydraulic pressure of either the baler hydraulic system pressure P2 or the tractor hydraulic system pressure P1 for 50% of each cycle. By increasing the density of the bale, the diameter of the bale is reduced, thereby providing a bale of smaller diameter with the same quantity of crop material by weight. By reducing the diameter of the bale for the same quantity of crop material by weight, a bale of the same quantity of crop material by weight can be more easily handled and transported.

Returning now to the operation of the baler/bale wrapper, in use, the baler/bale wrapper 1 is coupled to the towing tractor, and the power take-off shaft of the tractor coupled to the gearbox 30 of the baler/bale wrapper 1 through a Cardan shaft, and the hydraulic system 61 is coupled to the hydraulic system 62 of the tractor to provide the hydraulic fluid to the hydraulic system 61 at the tractor hydraulic system pressure P1. The hydraulic density pressure at which the hydraulic fluid is to be applied to the rams 40 during forming of the bale in the bale chamber 19 is inputted into the microcontroller 70 through the interface 71. Any other data and instructions to the microcontroller 70 are also inputted to the microcontroller 70 through the interface 71. On the selected hydraulic density pressure being inputted to the microcontroller 70, the microcontroller 70 sets the secondary pressure regulator 65 to control the pressure of the hydraulic fluid therefrom at the selected hydraulic density pressure, and depending on the selected hydraulic density pressure, the microcontroller 70 sets the third valve 69 to apply the hydraulic fluid to the second valve 68 at the appropriate one of the baler hydraulic system pressure P2 or the tractor hydraulic system pressure P1. The microcontroller 70 operates the second valve 68 to deliver the hydraulic fluid at the selected hydraulic density pressure to the first valve 67, and in turn to the hydraulic rams 40 during formation of the bale in the bale chamber 19 and during initial circumferential wrapping of the bale in the bale chamber 19.

With the closure segment 17 in the closed state and the tipping segment 15 in the bale forming state, and with the bale rotating rollers 25 of the baler 3 being driven in rotation by the transmission system of the baler 3, and the pick-up mechanism 52 operating to pick-up crop material, the baler/bale wrapper 1 is towed by the tractor along an elongated windrow of crop material in the direction of the arrow A. As the crop material is being picked up from the windrow by the pick-up mechanism 52 and transferred into the bale chamber 19, the rotating bale rotating rollers 25 begin to rotate the crop material within the bale chamber 19.

As the crop material is being progressively delivered into the bale chamber 19, the crop material is rotated in the bale chamber 19, until the crop material is formed into a cylindrical bale. Further delivery of crop material into the bale chamber 19 results in the diameter of the cylindrical bale increasing until the diameter of the bale in the bale chamber 19 is equal to the diameter of the bale chamber 19 defined by the bale rotating rollers 25. At that stage, further delivery of crop material into the bale chamber results in the cylindrical bale being compacted and the density of the bale commences to increase. This compacting and progressive increasing of the density of the bale in the bale chamber continues until the radial outward pressure exerted by the bale on the closure segment 17 exceeds the pressure being applied to the bale by the closure segment 17 due to the force with which the rams 40 are urging the closure segment into the closed state. The pressure applied to the bale in the bale chamber 19 by the rams 40 acting between the chassis 7 and the closure segment 17 at this stage is dependent on the selected hydraulic density pressure applied to the rams 40 through the first and second valves 67 and 68.

As further crop material is delivered into the bale chamber 19, once the radial outward pressure of the bale acting on the closure segment 17 begins to exceed the pressure of the closure segment 17 acting on the bale, the closure segment 17 begins to pivot about the first pivot axis 35, and is angularly displaced from the closed state by the angular displacement *θ* about the first pivot axis 35.

The microcontroller 70 reads signals from the distance sensor 73. When the spacing s between the distance sensor 73 and the reference plate 76 has reached a predefined distance corresponding to the predefined angular displacement *θ* of the closure segment 17 from the closed state, namely, in this case the angular displacement of 3.5° from the closed state, the microcontroller 70 determines the formation of the bale in the bale chamber 19 to be complete. The microcontroller 70 then outputs a signal which is applied to a sounder and/or a light in the cab of the tractor to produce an audible and/or a visual signal, or both to the driver of the tractor indicating that formation of the bale in the bale chamber 19 is complete, and advising the driver to stop the baler/bale wrapper 1, in order to prevent further crop material being delivered into the bale chamber 19. On stopping of the baler/bale wrapper 1, with the bale rotating rollers 25 still being driven in rotation and rotating the bale in the bale chamber 19, the wrapping material dispenser 53 is activated by the microcontroller 70 to deliver the wrapping material 54 from the roll 55 thereof into the bale chamber 19 between the bale rotating rollers 25e and 25f, so that with the bale rotating in the bale chamber 19, the wrapping film 54 is drawn into the bale chamber 19 between the circumferential surface of the bale and the bale rotating rollers 25 to commence circumferential wrapping of the bale in the bale chamber 19.

On completion of the formation of the bale in the bale chamber, and during the initial delivery of the wrapping film into the bale chamber 19, the pressure of the hydraulic fluid applied to the rams 40 is maintained by the second valve 68 at the hydraulic density pressure.

On the commencement of delivery of the wrapping film 54 into the bale chamber 19 the microcontroller 70 commences to time a predefined time period which corresponds to the time it takes for the bale to rotate through the predefined angle of approximately 210° from the commencement of delivery of the wrapping film 54 into the bale chamber 19. On the predefined time period having timed out, the bale having rotated through the predefined rotational angle of approximately 210° from the commencement of delivery of the wrapping film 54 into the bale chamber 19, the microcontroller 70 operates the second valve 68 to cycle the pressure of the hydraulic fluid applied to the rams 40 between the first hydraulic pressure, namely, the hydraulic density pressure and the second hydraulic pressure in order to increase the density of the bale during circumferential wrapping thereof. As discussed above, the second hydraulic pressure of the hydraulic fluid applied to the rams 40 is determined by the setting of the third valve 69, and is either the baler hydraulic system pressure P2 set by the primary regulator 64 or the tractor hydraulic system pressure P1, namely, the pressure of the hydraulic fluid at which the hydraulic fluid is supplied from the tractor hydraulic system to the baler hydraulic system 61. The microcontroller 70 is programmed to operate the second valve 68 to cycle the pressure between the hydraulic density pressure and either the baler hydraulic system pressure P2 or the tractor hydraulic system pressure P1 at a cycling rate of approximately 0.3Hz, to in turn cycle the pressure applied to the bale in the bale chamber 19 by the closure segment between the first and second bale pressures until the circumferential wrapping of the bale in the bale chamber 19 is completed. In this embodiment of the invention the bale is circumferentially wrapped with four turns of the wrapping film 54, and as discussed above, the bale is subjected to three cycles of cycling of the pressure applied to the bale in the bale chamber between the first and second bale pressures. However, it will be appreciated that the number of cycles of the cycling of the pressure to which the bale will be subjected will depend on the number of turns of the wrapping film to be applied to the bale during circumferential wrapping of the bale in the bale chamber.

In this embodiment of the invention the first hydraulic pressure, which is approximately equal to the selected hydraulic density pressure, results in a first force being applied to the closure segment 17 by the rams 40. The first force applied to the closure segment 17 by the rams 40 lies in the range 1,500N to 10,500N. The second hydraulic pressure applied to the rams 40, which is approximately equal to either the baler hydraulic system pressure P2, or the tractor hydraulic system pressure P1, results in the second force being applied to the closure segment 17 by the rams 40. If the second hydraulic pressure applied to the rams 40 is at the baler hydraulic system pressure P2, the second force applied to the closure segment 17 by the rams 40 is approximately 11,500N. If the second hydraulic pressure applied to the rams 40 is at the tractor hydraulic system pressure P1, the second force applied to the closure segment 17 by the rams 40 is approximately 13,200N. The first force applied to the closure segment results in the closure segment 17 applying the first bale pressure to the bale during circumferential wrapping thereof in the bale chamber 19, and the second force applied to the closure segment 17 results in the closure segment 17 applying the second bale pressure to the bale during circumferential wrapping thereof in the bale chamber 19.

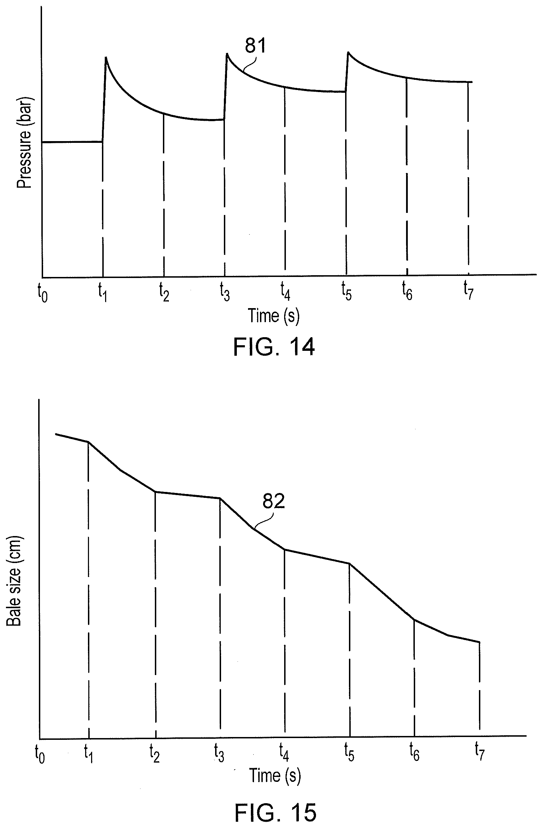

Referring now to Fig. 14, there is illustrated a graph 81 illustrating another example of the cycling of the hydraulic pressure of the hydraulic fluid applied to the rams 40 of the baler 3 during circumferential wrapping of the bale in the bale chamber 19 in accordance with a method according to another embodiment of the invention. The cycling of the pressure of the hydraulic fluid applied to the rams 40 in this embodiment of the invention is different to the cycling of the pressure of the hydraulic fluid applied to the rams 40 described with reference to Fig. 11, but the pressure is cycled at the rate of 0.3Hz. In Fig. 14 like Fig. 11, pressure in bar is plotted on the Y-axis in bar, and time in seconds is plotted on the X-axis in seconds.

In this example the selected hydraulic density pressure is a relatively low hydraulic density pressure, and is considerably below the baler hydraulic system pressure P2. Accordingly, in this example the second hydraulic pressure is selected as the baler hydraulic system pressure P2. The third valve 69 is set by the microcontroller 70 to apply the baler hydraulic system pressure P2 to the second valve 68, so that during cycling of the hydraulic pressure of the hydraulic fluid applied to the rams 40, the hydraulic pressure is cycled between the first hydraulic pressure, namely, the hydraulic density pressure and the second hydraulic pressure, namely, the baler hydraulic system pressure P2.

On the bale having rotated through the predefined rotational angle of 210° from the commencement of delivery of the wrapping film 54 into the bale chamber 19, cycling of the pressure of the hydraulic fluid applied to the rams 40 commences. At the beginning of the first cycle, at time t₁ the pressure of the hydraulic fluid is substantially instantaneously raised from the hydraulic density pressure to the second hydraulic pressure determined by the third valve 69, namely, the baler hydraulic system pressure P2. Once the pressure of the hydraulic fluid applied to the rams 40 has reached the second hydraulic pressure, the second valve 68 is operated by the microcontroller 70 to apply the hydraulic density pressure to the first valve 67 and in turn to the rams 40. The pressure of the hydraulic fluid applied to the rams 40 over the remainder of the three seconds approximately of the first cycle, falls exponentially towards the hydraulic density pressure.

At the end of the first cycle, the second valve 68 is operated to apply the hydraulic fluid to the rams 40 at the second hydraulic pressure and the pressure of the hydraulic fluid applied to the rams 40 substantially instantaneously increases to the second hydraulic pressure. Again, once the pressure of the hydraulic fluid applied to the rams 40 has reached the second hydraulic pressure, the second valve 68 is again operated to apply the hydraulic fluid to the rams 40 at the hydraulic density pressure for the remainder of the second cycle, and the pressure applied to the rams 40 falls exponentially towards the hydraulic density pressure, and so on for the remainder of the cycling of the pressure during the circumferential wrapping of the bale in the bale chamber 19.

However, due to hysteresis in the hydraulic system 61, the pressure of the hydraulic fluid applied to the rams 40 never reaches the hydraulic density pressure during the cycling of the pressure, and as can be seen from Fig. 14, the pressure to which the hydraulic fluid falls at the end of each cycle progressively increases incrementally.

Referring now to Fig. 15 a graph 82 is illustrated which illustrates the reduction in diameter of the bale during circumferential wrapping of the bale in the bale chamber 19 during the example described with reference to Fig. 14. In Fig. 15, like Fig 12, the reduction in diameter of the bale in centimetres during circumferential wrapping of the bale is plotted on the Y-axis, and time in seconds is plotted on the X-axis. The time period from time t₀ to time t₇ of Fig. 15 correspond with the time period from time t₀ to time t₇, of Fig. 14.

As can be seen from time t₁ to time t₂ while the hydraulic pressure of the hydraulic fluid applied to the rams 40 is falling exponentially from the second hydraulic pressure during the first half of the first cycle from time t₁ to time t₂, a significant reduction in the diameter of the bale occurs. During the second half of the first cycle from time t₂ to time t₃ while the rate of fall of the pressure towards the hydraulic density pressure has reduced, the reduction in the diameter of the bale is less than the reduction of the diameter of the bale during the first half of the first cycle from time t₁ to time t_{2.} During the first half of the second cycle from time t₃ to time t₄ while the pressure of the hydraulic fluid applied to the rams 40 is falling exponentially from the second hydraulic pressure, there is a further significant reduction in the diameterof the bale. During the second half of the second cycle from time t₄ to t₅, the reduction in diameter of the bale is less significant, and so on to the end of the third cycle at time t₇. Accordingly, it can be seen from Fig. 15 that during the circumferential wrapping of the bale in the bale chamber with the hydraulic pressure of the hydraulic fluid applied to the rams 40 being cycled between the hydraulic density pressure and the second hydraulic pressure, a significant reduction in the diameter of the bale is achieved. By significantly reducing the diameter of the bale during circumferential wrapping of the bale in the bale chamber, the density of the bale is proportionally significantly reduced during the circumferential wrapping of the bale in the bale chamber.

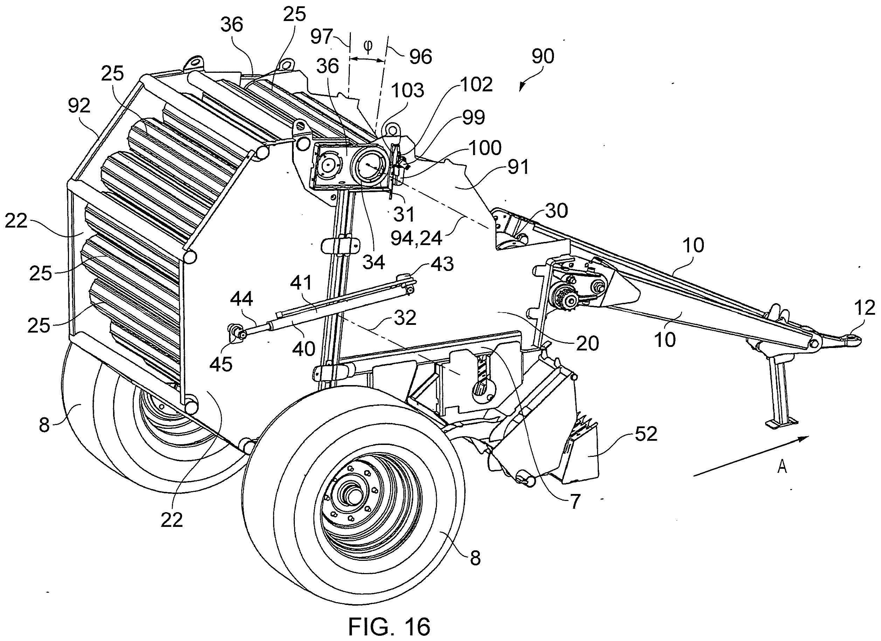

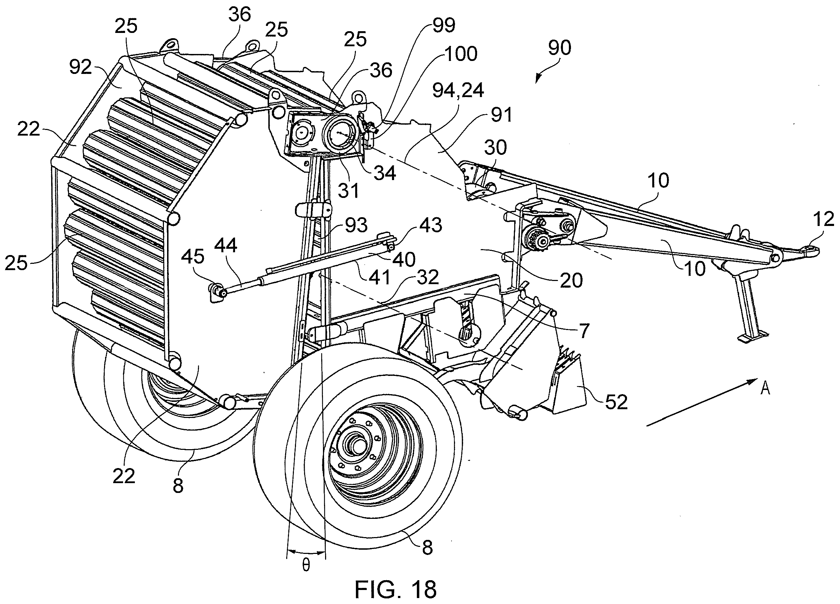

Referring now to Figs. 16 to 19 there is illustrated a fixed chamber baler also according to the invention indicated generally by the reference numeral 90. The baler 90 is substantially similar to the baler3 of the combined baler/bale wrapper 1 described with reference to Figs. 1 to 10, and similar components are identified by the same reference numerals. The main difference between the baler 90 and the baler3 is that in this embodiment of the invention the baler 90 comprises a forward fixed segment 91 and a rearward closure segment 92, which together define a bale chamber 93. The tipping segment of the baler 3 is not required in the baler 90. The fixed segment 91 defines 180° of the bale chamber 93, while the closure segment 92 defines the other 180° of the bale chamber 93.

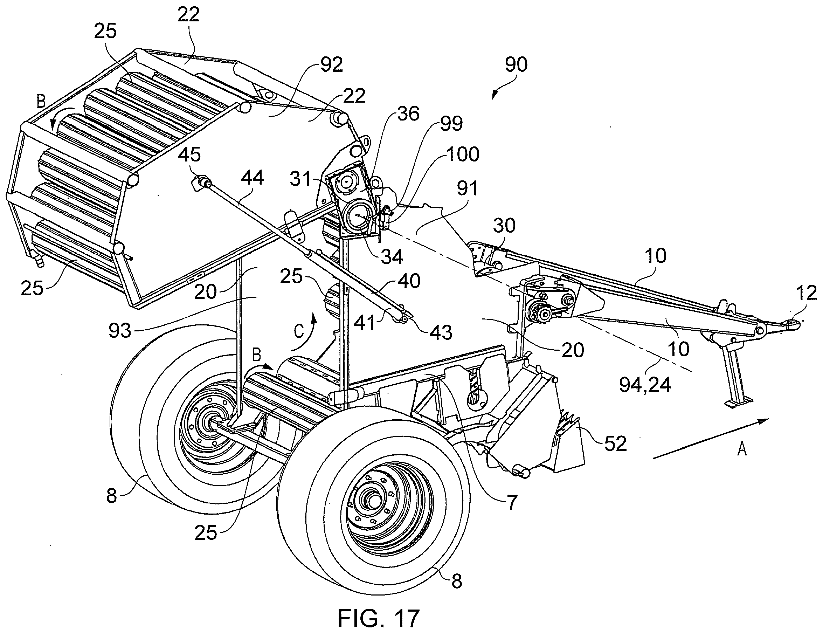

The closure segment 92 is pivotally coupled to the fixed segment 91 adjacent an upper portion of the baler 90 by a pair of pivot brackets, similar to the pivot brackets 36 of the baler 3, and the pivot brackets 36 extend from the respective side walls 22 of the closure segment 92. Each pivot bracket 36 comprises a first bearing ring 31 mounted fast thereon, which is pivotally engageable with a corresponding second bearing ring 34 mounted fast on the corresponding side wall 20 of the fixed segment 91, as already described in connection with the baler 3. The second bearing rings 34 define a common first pivot axis 94 about which the closure segment 92 is pivotal between the closed state illustrated in Fig. 16 defining with the fixed segment 91, the bale chamber 93, and an open state illustrated in Fig. 17 for accommodating discharge of a formed circumferentially wrapped bale from the bale chamber 93. The first pivot axis 94 extends parallel to the main central axis 32 defined by the bale chamber 93 and lies in a first plane 96 containing the main central axis 32. The first plane 96 lies at an angle *ϕ* to a vertical plane 97 containing the main central axis 32 of approximately 17°, with the first pivot axis 94 located forwardly of the vertical plane 97 containing the main central axis 32 relative to the direction of normal forward travel of the baler 90, namely, the direction of the arrow A.

Since the tipping segment has been omitted from the baler 90, the rams 40 for operating the closure segment 92 between the open and closed states and for urging the closure segment 92 into the closed state, are coupled directly between the respective side walls 20 of the fixed segment 14 and the respective side walls 22 of the closure segment 92. In view of the fact that the forward fixed segment 91 defines the forward 180° of the bale chamber 93, and the closure segment 92 defines the rearward 180° of the bale chamber 93, when the closure segment 92 is urged from the closed state to the open state by the rams 40, the formed circumferentially wrapped bale rolls from the bale chamber 93 to the ground.

A wrapping material dispenser (not shown) but similar to the wrapping material dispenser 53 of the baler 3 is located to the front of the fixed segment 91 and is configured to dispense wrapping film, similar to the wrapping film 54, into the bale chamber for circumferential wrapping of a formed bale therein through a suitable pair of the bale rotating rollers 25 of the fixed segment 91.

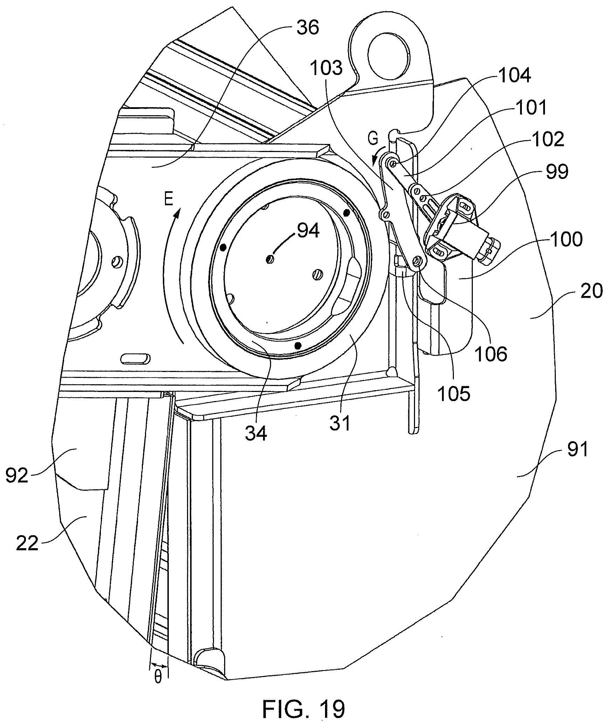

A monitoring means for monitoring the angular displacement *θ* of the closure segment 92 from the closed state for determining when formation of the bale in the bale chamber 93 is completed and when the bale is ready for circumferential wrapping in the bale chamber 93, comprises an angle displacement monitoring sensor 99, see Fig. 19. The angle displacement monitoring sensor 99 is mounted on a mounting bracket 100 secured to one of the side walls 20 of the fixed segment 91. A pivot arm 102 of the angle displacement monitoring sensor 99 extends from the angle displacement monitoring sensor 99 for monitoring the angular displacement of the closure segment 92 from the closed state. The angle displacement monitoring sensor 99 monitors the angular displacement of the pivot arm 102 from a datum state, and produces a signal indicative of the angular displacement of the pivot arm 102 from the datum state thereof. The pivot arm 102 is coupled to the first bearing ring 31 of the corresponding one of the pivot brackets 36 of the closure segment 17 through a link member 103, so that the angular displacement of the pivot arm 102 of the angle displacement monitoring sensor 99 from the datum state thereof is proportional to the angular displacement of the closure segment 36 from the closed state.

An extension member 101 is rigidly secured to the pivot arm 102 and extends therefrom. The extension member 101 is pivotally coupled to the link member 103 by a pivot pin 104. The link member 103 is pivotally coupled to a connecting bracket 105 which is rigidly secured to and extends from the first bearing ring 31 of the corresponding one of the pivot brackets 36. A pivot pin 106 pivotally couples the link member 103 to the connecting bracket 105.

Thus, as the closure segment 92 is being urged from the closed state by the action of the radial outward force applied by the rotating bale in the bale chamber 19 to the closure segment 17 as the formation of the bale in the bale chamber 19 is nearing completion, the pivot bracket 36 and in turn the first bearing ring 31 pivots in the direction of the arrow E, see Fig. 19. This in turn results in the pivot arm 102 of the angle displacement monitoring sensor 99 pivoting in the direction of the arrow G. A microcontroller similar to the microcontroller 70 of the combined baler/bale wrapper 1 of the baler 90 reads the signal from the angle displacement monitoring sensor 99. The microcontroller 70 of the baler 90 is programmed to determine the angular displacement of the closure segment 92 from the closed state from the signals read from the angle displacement monitoring sensor99, and in turn to determine when the formation of the bale in the bale chamber 19 is complete in response to the angular displacement *θ* of the closure segment 17 from the closed state thereof.

The hydraulic system (not shown) of the baler 90 is similar to the hydraulic system 61 of the baler/bale wrapper 1, and its operation is similar to that described with reference to the baler 3 of the baler/bale wrapper 1.

In use, the baler 90 is coupled to a towing vehicle, for example, a tractor, and drive from the power take-off shaft of the tractor is coupled to the gearbox 30 of the baler 90 through a Cardan shaft for operating the pick-up mechanism 52 and for rotating the bale forming rollers 25 and operating the wrapping material dispenser (not shown) for dispensing the wrapping film for circumferential wrapping of the bale in the bale chamber 93. The hydraulic system 61 of the baler 90 is coupled to the hydraulic system of the tractor. Thereafter, operation of the baler 90 is similar to that of the baler 3 of the combined baler/bale wrapper. The microcontroller 70 reads the signal from the angle displacement monitoring sensor 99. On the signal read from the angle displacement monitoring sensor 99 being indicative of the closure segment 92 having been displaced through the predefined angular displacement *θ* from the closed state thereof, which in this case is also 3.5°, indicative of completion of formation of the bale in the bale chamber93, the microcontroller 70 outputs the warning signal to the tractor driver indicating the formation of the bale in the bale chamber 93 is complete, and indicating that the baler 90 should be stopped to allow circumferential wrapping of the bale in the bale chamber to commence. On the baler 90 being brought to a halt, the wrapping material dispenser (not shown) is activated to commence delivery of the wrapping film into the bale chamber 93 to commence circumferential wrapping of the bale in the bale chamber 93.

On the bale having rotated through the predefined rotational angle, which in this embodiment of the invention is also 210° in the bale chamber 93 from the commencement of delivery of the wrapping film into the bale chamber 93, the microcontroller 70 operates the hydraulic system 61 of the baler 90 to commence cycling of the pressure of the hydraulic fluid applied to the rams 40, as already described with reference to the baler 3 of the baler/bale wrapper 1. In this embodiment of the invention cycling of the hydraulic fluid between the hydraulic density pressure and the second hydraulic pressure, which is set by the third valve 69, is carried out through three cycles, which coincides with completion of the circumferential wrapping of the bale in the bale chamber 93.

On completion of the circumferential wrapping of the bale in the bale chamber 93, the microcontroller 70 operates the rams 40 to urge the closure segment 92 from the closed state to the open state in order to discharge the circumferentially wrapped formed bale from the bale chamber 93.

Otherwise, the baler 90 and its operation is similar to the operation of the baler 3 of the baler/bale wrapper 1.

While specific values of baler hydraulic system pressure and tractor hydraulic system pressure have been described, it will be readily apparent to those skilled in the art that the hydraulic system pressures of the balers, and the tractor may be of any other suitable or available values than those described.

It will also be appreciated that other suitable hydraulic circuitry besides that illustrated in Fig. 10 may be used for cycling the hydraulic pressure of the hydraulic fluid applied to the rams between the first and second hydraulic pressures, which in turn cycle the pressure applied to the bale in the bale chamber during circumferential wrapping thereof between the first and second bale pressures. It will also be appreciated that while the first hydraulic pressure of the hydraulic fluid applied to the rams has been described as being approximately equal to the selected hydraulic density pressure, and the second hydraulic pressure has been described as being approximately equal to either the baler hydraulic system pressure P2 or the tractor hydraulic system pressure P1, the first and second hydraulic pressures may be of any other suitable values.

It will also be appreciated that the pressure of the hydraulic fluid applied to the rams to produce the first and second bale pressures applied to the bale in the bale chamber will vary, depending on the size of the rams, and in particular, the diameter of the cylinders of the rams, the diameter of the pistons of the rams and the diameter of the piston rods of the rams.

While the fixed chamber balers have been described as being of specific construction, one comprising a three segment fixed chamber baler and the other comprising a two segment fixed chamber baler, the fixed chamber baler may be of any other suitable or desired construction, and of course it will be appreciated that the method according to the invention for increasing the density of a bale during circumferential wrapping of the bale in the bale chamber may be applied to any suitable fixed chamber or roller baler. Indeed, in some embodiments of the invention it is envisaged that the method according to the invention for increasing the density of the bale in the bale chamber during circumferential wrapping thereof, may be used in connection with fixed chamber balers, in which the diameter of the chamber may be varied by the selective insertion of one or more additional bale rotating rollers, which would typically be inserted between the closure segment and a corresponding adjacent segment, namely, a tipping segment or a fixed segment, adjacent the portion of the closure segment which is moveable away from the adjacent segment when the closure segment is being pivoted from the closed state to the open state.

While the wrapping material for circumferential wrapping of the bale in the bale chamber has been described as comprising plastics film wrapping material, it will be readily apparent to those skilled in the art that any other suitable material may be used for circumferentially securing the bale in the bale chamber prior to discharge of the bale from the bale chamber. Such materials may include net wrapping material or any other material suitable for circumferentially wrapping or circumferentially securing the bale in the bale chamber.

While the balers have been described for baling crop material, it will be readily apparent to those skilled in the art that the balers according to the invention may be used for baling any other material suitable for baling, for example, waste material and the like.

Additionally, it is envisaged in some embodiments of the invention that the first hydraulic pressure need not necessarily be equal to or substantially equal to the hydraulic density pressure. It is envisaged in some embodiments of the invention an additional pressure regulator may be provided in the hydraulic control circuit to regulate the pressure to a specific first hydraulic pressure, or to a selectable number of first hydraulic pressures. In a case where the first hydraulic pressure is selectable, the pressure regulator for producing the hydraulic fluid at the first hydraulic pressure would be operated under the control of the microcontroller 70.

It will also be appreciated that while the second bale pressure applied to the bale in the bale chamber has been described as being derived from either the baler hydraulic system pressure or the tractor hydraulic system pressure, this is not essential, in some embodiments of the invention it is envisaged that a further additional pressure regulator may be provided, which would be controlled by the microcontroller to set the pressure of the hydraulic fluid at a suitable second hydraulic pressure to be applied to the rams to produce the second bale pressure to the bale in the bale chamber. In which case, it is envisaged that the microcontroller 70 would be programmed to operate the further additional pressure regulator to supply the hydraulic fluid at an appropriate second hydraulic pressure on either the first hydraulic pressure or the hydraulic density pressure, as the case may be, having been selected, so that the second hydraulic pressure would be at least 122% of the selected first hydraulic pressure or the selected hydraulic density pressure.

While the fixed chamber balers have been described as comprising a pair of rams for operating the closure segment between the closed and the open state, and also for urging the closure segment into the closed state, in some embodiments of the invention more than two rams may be provided, and in other embodiments of the invention a single ram may be provided.

While a specific value of predefined angular displacement of the closure segment from the closed state thereof has been described for determining when the formation of the bale in the bale chamber has been completed prior to circumferential wrapping thereof, any other suitable predefined angular displacement of the closure segment from the closed state thereof may be used to determine the completion of the formation of the bale in the bale chamber prior to circumferential wrapping thereof.

While in the examples discussed with reference to Figs. 11 to 15, the circumferential wrapping of the bale in the bale chamber was subjected to three cycles of the cycling pressure, however, it will be appreciated that the number of cycles of the cycling pressure to which the bale will be subjected during circumferential wrapping of the bale in the bale chamber will be dependent on the length of time it takes to circumferentially wrap the bale, and the frequency of the cycling of the pressure. In general, the cycling of the pressure applied to the bale during circumferential wrapping thereof will continue until the circumferential wrapping of the bale has been completed.

While the frequency of the cycling of the hydraulic pressure of the hydraulic fluid applied to the rams 40 has been described as being cycled at a frequency of 0.3Hz, it is envisaged that the frequency of the cycling of the hydraulic pressure of the hydraulic fluid applied to the rams of the baler may be any suitable frequency, and typically, would be a frequency lying in the range of 0.2Hz to 0.5Hz.

While the predefined rotational angle through which the bale is to rotate in the bale chamber between the commencement of delivery of the wrapping material into the bale chamber and the commencement of cycling of the pressure of the hydraulic fluid applied to the rams has been described as being 210°, itwill be readily apparent to those skilled in the art that the cycling of the pressure of the hydraulic fluid applied to the rams may commence once the bale has rotated through any suitable angle from the commencement of delivery of wrapping material into the bale chamber. Indeed, in some embodiments of the invention the cycling of the pressure of the hydraulic fluid applied to the rams may commence immediately upon delivery of wrapping material into the bale chamber. However, in general, it is preferable that the commencement of cycling of the pressure of the hydraulic fluid applied to the rams should be delayed until the wrapping material has passed the adjacent bale rotating rollers of the closure segment and the tipping segment of the baler 3 of the combined baler/bale wrapper 1, and in the case of the baler 90, the wrapping material has passed the adjacent lowest bale rotating roller of the closure segment 92 and the fixed segment 91. This is to avoid any risk of the leading edge of the wrapping material being forced out of the bale chamber between the adjacent bale rotating rollers of the closure segment and the tipping segment of the baler 3, and between the adjacent lowest most bale rotating rollers of the closure segment 92 and the fixed segment 91 of the baler 90, on the first turn of the wrapping material when the closure segment is angularly displaced from its closed state.

While the hydraulic density pressure has been described as being selectable in the balers described according to the invention, it will be readily apparent to those skilled in the art that while it is desirable that the hydraulic density pressure of the hydraulic fluid is selectable, this is not essential, and in some embodiments of the invention the hydraulic density pressure of the hydraulic fluid may be preset.

## Claims

1. A method for increasing the density of a bale in a bale chamber (19, 93) of a fixed chamber baler (3, 90), **characterised in that** the method comprises cycling the pressure applied to the bale in the bale chamber (19,93) between a first bale pressure and a second bale pressure during circumferential wrapping of the bale in the bale chamber (19,93), the second bale pressure being greater than the first bale pressure.

2. A method as claimed in Claim 1 **characterised in that** cycling of the pressure applied to the bale in the bale chamber (19, 93) is commenced on or after the commencement of the circumferential wrapping of the bale in the bale chamber.

3. A method as claimed in Claim 1 or 2 **characterised in that** cycling of the pressure applied to the bale in the bale chamber (19, 93) is commenced when the bale has rotated in the bale chamber through a predefined rotational angle of at least 150° from the commencement of circumferential wrapping of the bale in the bale chamber.

4. A method as claimed in any preceding claim **characterised in that** the pressure applied to the bale in the bale chamber (19, 93) during cycling thereof is cycled through the first and second bale pressures at a rate in the range of 0.2Hz to 0.5Hz.

5. A method as claimed in any preceding claim **characterised in that** the value of the first bale pressure during the first cycle of the cycling of the pressure applied to the bale in the bale chamber (19,93), is approximately equal to the pressure applied to the bale in the bale chamber just prior to commencement of circumferential wrapping of the bale in the bale chamber.

6. A method as claimed in any preceding claim **characterised in that** the value of the second bale pressure applied to the bale in the bale chamber (19, 93) during cycling of the pressure applied to the bale lies in the range of 105% to 700% of the value of the pressure applied to the bale in the bale chamber just prior to the commencement of circumferential wrapping of the bale in the bale chamber.

7. A method as claimed in any preceding claim **characterised in that** at the beginning of each cycle of the cycling of the pressure applied to the bale in the bale chamber (19, 93) during circumferential wrapping thereof, the pressure applied to the bale in the bale chamber is raised to the second bale pressure.

8. A method as claimed in any preceding claim **characterised in that** the pressure on being raised to the second bale pressure during each cycle of the cycling of the pressure applied to the bale in the bale chamber (19, 93) during circumferential wrapping thereof is maintained at the second bale pressure for a predefined time period during each cycle of the cycling pressure.

9. A method as claimed in Claim 8 **characterised in that** at the end of the predefined time period of each cycle of the cycling of the pressure, during which the pressure applied to the bale in the bale chamber (19, 93) is maintained at the second bale pressure, the pressure is allowed to fall towards the first bale pressure.

10. A method as claimed in any of Claims 1 to 7 **characterised in that** immediately after the pressure applied to the bale in the bale chamber (19, 93) reaches the second bale pressure in each cycle of the cycling pressure, the pressure applied to the bale in the bale chamber is allowed to fall towards the first bale pressure.

11. A method as claimed in any preceding claim **characterised in that** the pressure applied to the bale in the bale chamber (19, 93) during circumferential wrapping thereof is cycled for at least two cycles of the cycling pressure.

12. A method as claimed in any preceding claim **characterised in that** the first and second bale pressures applied to the bale in the bale chamber (19, 93) during circumferential wrapping of the bale are applied to the bale in the bale chamber by a pressing means (40) powered by a hydraulic system (61) of the baler (3, 90).

13. A method as claimed in Claim 12 **characterised in that** the hydraulic fluid to power the pressing means (40) to apply the first bale pressure to the bale in the bale chamber (19, 93) during cycling of the pressure comprises a first hydraulic pressure, the first hydraulic pressure preferably being approximately equal to the hydraulic density pressure of the hydraulic fluid, and the pressure of the hydraulic fluid to power the pressing means (40) to apply the second bale pressure to the bale in the bale chamber (19, 93) during cycling of the pressure comprises a second hydraulic pressure, the second hydraulic pressure preferably being derived from a hydraulic pressure of the hydraulic system of the baler or from a hydraulic pressure at which hydraulic fluid is supplied to the hydraulic system of the baler (3, 90) from a towing vehicle to which the baler is attached for towing thereof.

14. A fixed chamber baler defining a bale chamber (19, 93) within which a cylindrical bale is formed and circumferentially wrapped, the fixed chamber baler comprising a pressing means (17, 92, 40) for applying pressure to the bale in the bale chamber (19, 93), **characterised in that** the pressing means (17, 92, 40) is adapted for alternately applying a first bale pressure and a second bale pressure to a bale in the bale chamber (19, 93), and a means is configured for cycling the pressure applied to the bale in the bale chamber (19, 93) between the first bale pressure and the second bale pressure during circumferential wrapping of the bale in the bale chamber (19, 93) for increasing the density of the bale during circumferential wrapping thereof in the bale chamber (19, 93), the second bale pressure being greater than the first bale pressure.

15. A fixed chamber baler as claimed in Claim 14 **characterised in that** the pressing means (17, 92, 40) comprises a closure segment (17, 92) defining and closing a part of the bale chamber (19, 93), and an urging means (40) for urging the closure segment (17, 92) into a closed state, the urging means (40) being powered by hydraulic fluid of a hydraulic system (61) of the baler alternately at a first hydraulic pressure and at a second hydraulic pressure to apply the respective first and second bale pressures to the bale in the bale chamber (19, 93).

## Patentansprüche

1. Verfahren zur Erhöhung der Dichte eines Ballens in einer Ballenkammer (19, 93) einer Festkammerballenpresse (3, 90), **dadurch gekennzeichnet, dass** das Verfahren ein zyklisches Wechseln des auf den Ballen in der Ballenkammer (19, 93) ausgeübten Drucks zwischen einem ersten Ballendruck und einem zweiten Ballendruck während einer Umfangsumwicklung des Ballens in der Ballenkammer (19, 93) umfasst, wobei der zweite Ballendruck größer ist als der erste Ballendruck.

2. Verfahren nach Anspruch 1, **dadurch gekennzeichnet, dass** das zyklische Wechseln des auf den Ballen in der Ballenkammer (19, 93) ausgeübten Drucks zu oder nach dem Beginn der Umfangsumwicklung des Ballens in der Ballenkammer begonnen wird.

3. Verfahren nach Anspruch 1 oder 2, **dadurch gekennzeichnet, dass** das zyklische Wechseln des auf den Ballen in der Ballenkammer (19, 93) ausgeübten Drucks begonnen wird, wenn sich der Ballen in der Ballenkammer um einen vordefinierten Drehwinkel von mindestens 150° ab dem Beginn der Umfangsumwicklung des Ballens in der Ballenkammer gedreht hat.

4. Verfahren nach einem der vorhergehenden Ansprüche, **dadurch gekennzeichnet, dass** der auf den Ballen in der Ballenkammer (19, 93) ausgeübte Druck während des zyklischen Wechselns zwischen dem ersten und zweiten Ballendruck mit einer Frequenz im Bereich von 0,2 Hz bis 0,5 Hz zyklisch gewechselt wird.

5. Verfahren nach einem der vorhergehenden Ansprüche, **dadurch gekennzeichnet, dass** der Wert des ersten Ballendrucks während des ersten Zyklus des zyklischen Wechselns des auf den Ballen in der Ballenkammer (19, 93) ausgeübten Drucks etwa dem auf den Ballen in der Ballenkammer ausgeübten Druck unmittelbar vor Beginn der Umfangsumwicklung des Ballens in der Ballenkammer entspricht.

6. Verfahren nach einem der vorhergehenden Ansprüche, **dadurch gekennzeichnet, dass** der Wert des auf den Ballen in der Ballenkammer (19, 93) ausgeübten zweiten Ballendrucks während des zyklischen Wechselns des auf den Ballen ausgeübten Drucks im Bereich von 105 % bis 700 % des Werts des auf den Ballen in der Ballenkammer ausgeübten Drucks unmittelbar vor dem Beginn der Umfangsumwicklung des Ballens in der Ballenkammer liegt.

7. Verfahren nach einem der vorhergehenden Ansprüche, **dadurch gekennzeichnet, dass** der auf den Ballen in der Ballenkammer ausgeübte Druck zu Beginn jedes Zyklus des zyklischen Wechselns des auf den Ballen in der Ballenkammer (19, 93) ausgeübten Drucks während dessen Umfangsumwicklung auf den zweiten Ballendruck erhöht wird.

8. Verfahren nach einem der vorhergehenden Ansprüche, **dadurch gekennzeichnet, dass** der Druck nach Erhöhung auf den zweiten Ballendruck während jedes Zyklus des zyklischen Wechselns des auf den Ballen in der Ballenkammer (19, 93) ausgeübten Drucks während dessen Umfangsumwicklung für eine vordefinierte Zeitspanne während jedes Zyklus des zyklischen Druckwechsels auf dem zweiten Ballendruck gehalten wird.

9. Verfahren nach Anspruch 8, **dadurch gekennzeichnet, dass** am Ende der vordefinierten Zeitspanne jedes Zyklus des zyklischen Druckwechsels, während der der auf den Ballen in der Ballenkammer (19, 93) ausgeübte Druck auf dem zweiten Ballendruck gehalten wird, dem Druck ermöglicht wird, auf den ersten Ballendruck abzufallen.

10. Verfahren nach einem der Ansprüche 1 bis 7, **dadurch gekennzeichnet, dass** unmittelbar nachdem der auf den Ballen in der Ballenkammer (19, 93) ausgeübte Druck den zweiten Ballendruck in jedem Zyklus des zyklischen Druckwechsels erreicht, dem auf den Ballen in der Ballenkammer ausgeübten Druck ermöglicht wird, auf den ersten Ballendruck abzufallen.

11. Verfahren nach einem der vorhergehenden Ansprüche, **dadurch gekennzeichnet, dass** der auf den Ballen in der Ballenkammer (19, 93) ausgeübte Druck während dessen Umfangsumwicklung für mindestens zwei Zyklen des zyklischen Druckwechsels zyklisch gewechselt wird.

12. Verfahren nach einem der vorhergehenden Ansprüche, **dadurch gekennzeichnet, dass** der erste und der zweite Ballendruck, die auf den Ballen in der Ballenkammer (19, 93) während der Umfangsumwicklung des Ballens ausgeübt werden, durch eine Presseinrichtung (40), die von einem Hydrauliksystem (61) der Ballenpresse (3, 90) angetrieben wird, auf den Ballen in der Ballenkammer ausgeübt werden.

13. Verfahren nach Anspruch 12, **dadurch gekennzeichnet, dass** das Hydraulikfluid zum Antrieb der Presseinrichtung (40) zum Ausüben des ersten Ballendrucks auf den Ballen in der Ballenkammer (19, 93) während des zyklischen Druckwechsels einen ersten Hydraulikdruck umfasst, wobei der erste Hydraulikdruck vorzugsweise etwa gleich dem hydrostatischen Druck des Hydraulikfluids ist, und der Druck des Hydraulikfluids zum Antrieb der Presseinrichtung (40) zum Ausüben des zweiten Ballendrucks auf den Ballen in der Ballenkammer (19, 93) während des zyklischen Druckwechsels einen zweiten Hydraulikdruck umfasst, wobei der zweite Hydraulikdruck vorzugsweise von einem Hydraulikdruck des Hydrauliksystems der Ballenpresse oder von einem Hydraulikdruck abgeleitet ist, bei dem Hydraulikfluid dem Hydrauliksystem der Ballenpresse (3, 90) von einem Zugfahrzeug zugeführt wird, an das die Ballenpresse zum Ziehen derselben angehängt ist.

14. Festkammerballenpresse mit einer Ballenkammer (19, 93), in der ein zylindrischer Ballen geformt und umfangsumwickelt wird, wobei die Festkammerballenpresse eine Presseinrichtung (17, 92, 40) zum Ausüben von Druck auf den Ballen in der Ballenkammer (19, 93) umfasst, **dadurch gekennzeichnet, dass** die Presseinrichtung (17, 92, 40) dazu geeignet ist, abwechselnd einen ersten Ballendruck und einen zweiten Ballendruck auf einen Ballen in der Ballenkammer (19, 93) auszuüben, und dass eine Einrichtung zum zyklischen Wechseln des auf den Ballen in der Ballenkammer (19, 93) ausgeübten Drucks zwischen dem ersten Ballendruck und dem zweiten Ballendruck während der Umfangsumwicklung des Ballens in der Ballenkammer (19, 93) ausgebildet ist, um die Dichte des Ballens während dessen Umfangsumwicklung in der Ballenkammer (19, 93) zu erhöhen, wobei der zweite Ballendruck größer ist als der erste Ballendruck.

15. Festkammerballenpresse nach Anspruch 14, **dadurch gekennzeichnet, dass** die Presseinrichtung (17, 92, 40) ein Verschlusssegment (17, 92), das einen Teil der Ballenkammer (19, 93) definiert und verschließt, und eine Drängeinrichtung (40) umfasst, um das Verschlusssegment (17, 92) in einen geschlossenen Zustand zu drücken, wobei die Drängeinrichtung (40) durch Hydraulikfluid eines Hydrauliksystems (61) der Ballenpresse abwechselnd mit einem ersten Hydraulikdruck und einem zweiten Hydraulikdruck angetrieben wird, um den jeweiligen ersten und zweiten Ballendruck auf den Ballen in der Ballenkammer (19, 93) auszuüben.

## Revendications

1. Procédé pour augmenter la densité d'une balle dans une chambre à balles (19, 93) d'une presse à chambre fixe (3, 90), **caractérisé en ce que** le procédé comprend le fait de réguler la pression appliquée à la balle dans la chambre à balles (19, 93) entre une première pression de balle et une deuxième pression de balle pendant l'enrubannage circonférentiel de la balle dans la chambre à balles (19, 93), la deuxième pression de balle étant supérieure à la première pression de balle.

2. Procédé selon la revendication 1, **caractérisé en ce que** la régularisation de la pression appliquée à la balle dans la chambre à balles (19, 93) commence au moment du ou après le début de l'enrubannage circonférentiel de la balle dans la chambre à balles.

3. Procédé selon la revendication 1 ou 2, **caractérisé en ce que** la régularisation de la pression appliquée à la balle dans la chambre à balles (19, 93) commence lorsque la balle a tourné dans la chambre à balles d'un angle de rotation prédéfini d'au moins 150° à partir du début de l'enrubannage circonférentiel de la balle dans la chambre à balles.

4. Procédé selon l'une quelconque des revendications précédentes, **caractérisé en ce que** la pression appliquée à la balle dans la chambre à balles (19, 93) pendant la régularisation est régulée entre la première et la deuxième pressions de balle à une fréquence comprise entre 0,2 Hz et 0,5 Hz.

5. Procédé selon l'une quelconque des revendications précédentes, **caractérisé en ce que** la valeur de la première pression de balle pendant le premier cycle de la régularisation de la pression appliquée à la balle dans la chambre à balles (19, 93) est approximativement égale à la pression appliquée à la balle dans la chambre à balles juste avant le début de l'enroulement circonférentiel de la balle dans la chambre à balles.

6. Procédé selon l'une quelconque des revendications précédentes, **caractérisé en ce que** la valeur de la deuxième pression appliquée à la balle dans la chambre à balles (19,93) pendant la régularisation de la pression appliquée à la balle se situe dans la plage de 105 % à 700 % de la valeur de la pression appliquée à la balle dans la chambre à balles juste avant le début de l'enveloppement circonférentiel de la balle dans la chambre à balles.

7. Procédé selon l'une quelconque des revendications précédentes, **caractérisé en ce qu'**au début de chaque cycle de la régularisation de la pression appliquée à la balle dans la chambre à balles (19, 93) pendant son enrubannage circonférentiel, la pression appliquée à la balle dans la chambre à balles est augmentée jusqu'à la deuxième pression de balle.

8. Procédé selon l'une quelconque des revendications précédentes, **caractérisé en ce que** la pression, lorsqu'elle est augmentée à la deuxième pression de balle pendant chaque cycle de la régularisation de la pression appliquée à la balle dans la chambre à balles (19, 93) pendant son enrubannage circonférentiel, est maintenue à la deuxième pression de balle pendant une période de temps prédéfinie pendant chaque cycle de la régularisation de la pression.

9. Procédé selon la revendication 8, **caractérisé en ce qu'**à la fin de la période de temps prédéfinie de chaque cycle de la régularisation de la pression, pendant laquelle la pression appliquée à la balle dans la chambre à balles (19, 93) est maintenue à la deuxième pression de balle, la pression est autorisée à chuter vers la première pression de balle.

10. Procédé selon l'une quelconque des revendications 1 à 7, **caractérisé en ce que**, immédiatement après que la pression appliquée à la balle dans la chambre à balles (19, 93) atteint la deuxième pression de balle dans chaque cycle de la régularisation de la pression, la pression appliquée à la balle dans la chambre à balles est autorisée à chuter vers la première pression de balle.

11. Procédé selon l'une quelconque des revendications précédentes, **caractérisé en ce que** la pression appliquée à la balle dans la chambre à balles (19, 93) pendant son enrubannage circonférentiel est cyclée pendant au moins deux cycles de la régularisation de la pression.

12. Procédé selon l'une quelconque des revendications précédentes, **caractérisé en ce que** les première et deuxième pressions de balle appliquées à la balle dans la chambre à balles (19, 93) pendant l'enrubannage circonférentiel de la balle sont appliquées à la balle dans la chambre à balles par un moyen de pression (40) alimenté par un système hydraulique (61) de la presse à balles (3, 90).

13. Procédé selon la revendication 12, **caractérisé en ce que** le fluide hydraulique destiné à alimenter le moyen de pression (40) pour appliquer la première pression de balle à la balle dans la chambre à balles (19,93) pendant la régularisation de la pression comprend une première pression hydraulique, la première pression hydraulique étant de préférence approximativement égale à la pression de densité hydraulique du fluide hydraulique, et la pression du fluide hydraulique pour alimenter le moyen de pression (40) afin d'appliquer la deuxième pression de balle à la balle dans la chambre à balles (19,93) pendant la régularisation de la pression comprend une deuxième pression hydraulique, la deuxième pression hydraulique étant de préférence dérivée d'une pression hydraulique du système hydraulique de la presse à balles ou d'une pression hydraulique à laquelle le fluide hydraulique est fourni au système hydraulique de la presse à balles (3,90) à partir d'un véhicule tracteur auquel la presse à balles est attachée pour être tractée.

14. Presse à chambre fixe définissant une chambre à balles (19, 93) à l'intérieur de laquelle une balle cylindrique est formée et enroulée circonférentiellement, la presse à chambre fixe comprenant un moyen de pression (17, 92, 40) pour appliquer une pression à la balle dans la chambre à balles (19, 93), **caractérisée en ce que** le moyen de pression (17, 92, 40) est adapté pour appliquer alternativement une première pression de balle et une deuxième pression de balle à une balle dans la chambre à balles (19, 93), et un moyen est configuré pour régulariser la pression appliquée à la balle dans la chambre à balles (19, 93) entre la première pression de balle et la deuxième pression de balle pendant l'enroulement circonférentiel de la balle dans la chambre à balles (19, 93) afin d'augmenter la densité de la balle pendant son enroulement circonférentiel dans la chambre à balles (19, 93), la deuxième pression de balle étant supérieure à la première pression de balle.

15. Presse à chambre fixe selon la revendication 14, **caractérisée en ce que** le moyen de pression (17, 92, 40) comprend un segment de fermeture (17, 92) définissant et fermant une partie de la chambre à balles (19, 93), et un moyen de poussée (40) pour pousser le segment de fermeture (17, 92) dans un état fermé, le moyen de poussée (40) étant alimenté par un fluide hydraulique d'un système hydraulique (61) de la presse à balles alternativement à une première pression hydraulique et à une seconde pression hydraulique pour appliquer les première et seconde pressions respectives à la balle dans la chambre à balles (19, 93).
